# EUROPEAN PATENT APPLICATION

(11) **EP 4 717 682 A1**
(43) Date of publication of application: **01.04.2026**
(21) Application number: 25205539.7
(22) Date of filing: 30.09.2025
(51) Int. Cl.: C03C 17/36

(54) **HEATABLE WINDSHIELDS**

(30) Priority: 30.09.2024 US 202463700872 P
(71) Applicant: Vitro Flat Glass LLC, Cheswick PA 15024 (US)
(72) Inventor: Palladino, John, Cheswick, 15024 (US); Olsen, Bryan, Cheswick, 15024 (US)
(74) Representative: f & e patent

(57) **Abstract**

The present invention relates generally to vehicle transparencies, such as vehicle windshields, and in one particular embodiment, to a heatable vehicle windshield. In one instance, a heatable windshield according to the present invention comprises a substrate having a first coating formed over the substrate, the first coating comprising various dielectric, metallic, and primer layers; and a second coating formed over at least a portion of the first coating, the second coating being located above an AS-1 Line and comprising dielectric, metallic, and primer layers.

## Description

### CROSS REFERENCE TO RELATED APPLICATIONS

This application is a non-provisional application of and claims priority to United States Patent Application No. 163/700,872 filed on September 30, 2024, the disclosures of which is hereby incorporated by reference in its entirety.

### BACKGROUND OF THE INVENTION

### Field of the Invention

The present invention relates generally to vehicle transparencies, such as vehicle windshields, and in one particular embodiment, to a heatable vehicle windshield. In one instance, a heatable windshield according to the present invention comprises a substrate having a first coating formed over the substrate, the first coating comprising various dielectric, metallic, and primer layers; and a second coating formed over at least a portion of the first coating, the second coating being located at least above an AS-1 Line and comprising dielectric, metallic, and primer layers.

### Description of Related Art

As is known to those in the windshield arts, passing electric current through a conductor on a laminated vehicle windshield will raise the temperature of the windshield. This is particularly useful in colder climates for defogging and melting ice and/or snow on the windshield. In wire-heated windshields, fine electrically-conductive wires are placed between at least two windshield plies. The wires are connected to a power source, such as a conventional 14 volt vehicle alternator, or some other power source. The wires have sufficiently low resistance to provide a windshield with a power density of 5 to 7 watts per decimeter squared (W/dm²).

One problem with wire-heated windshields is that the wires can be seen by the vehicle's occupants, which is aesthetically undesirable and can interfere with visibility through the windshield. Alternatively, if the diameter of the wires is decreased to try to reduce the visibility of the wires, the number of wires must be increased to maintain the desired power density, which adversely decreases the total solar energy transmitted (TSET) by the windshield. Additionally, if the height of the windshield increases, the wires must be longer to maintain the desired power density. However, longer wires are also undesirable with respect to aesthetics and/or transmittance.

Another alternative solution is that some heated windshields use transparent conductive coatings rather than wires. However, these coatings have their own drawback. For example, conventional heated windshield coatings typically have a sheet resistance of about 1 ohm per square, or even 2 ohms per square (Ω/□) or greater. A conventional 14-volt (80 ampere, 1,120 watt) alternator typically cannot provide enough power sufficient for de-icing. To compensate for this, the vehicles must be designed with an electrical system that is able to increase the available power. For example, a 42 volt system can be added. While these changes address the need for an increased voltage, they also increase the cost and complexity of such a vehicle electrical system.

Therefore, it would be desired to provide a transparency that reduces or eliminates at least some of the problems associated with conventional heatable transparencies.

### SUMMARY OF THE INVENTION

The present invention relates to vehicle transparencies, such as vehicle windshields, and in one particular embodiment, to a heatable vehicle windshield. In one instance, a heatable windshield according to the present invention comprises a substrate having a first coating formed over the substrate, the first coating comprising various dielectric, metallic, and primer layers; and a second coating formed over at least a portion of the first coating, the second coating being located at least above an AS-1 Line and comprising dielectric, metallic, and primer layers.

In one embodiment, the present invention is directed to a coated article such as a windshield ply, or complete windshield, comprising a substrate; a first coating formed over the substrate, the first coating comprising a first dielectric layer over the substrate; a first metallic layer over the first dielectric layer; a first primer layer over the first metallic layer; a second dielectric layer over the first primer layer; and optionally a first protective layer over the second dielectric layer; and a second coating formed over a first portion of the first coating, the first portion comprising at least an area above an AS-1 Line, wherein the second coating comprises a second metallic layer over a portion of the second dielectric layer or, if present, a portion of the first protective layer; a second primer layer over the second metallic layer; a third dielectric layer over the second primer layer; and optionally a second protective layer over the third dielectric layer.

Clause 1: A coated article comprising a substrate; a first coating formed over the substrate, the first coating comprising a first dielectric layer over the substrate; a first metallic layer over the first dielectric layer; a first primer layer over the first metallic layer; a second dielectric layer over the first primer layer; and optionally a first protective layer over the second dielectric layer; and a second coating formed over a first portion of the first coating, the first portion comprising at least an area above an AS-1 Line, wherein the second coating comprises a second metallic layer over a portion of the second dielectric layer or, if present, a portion of the first protective layer; a second primer layer over the second metallic layer; a third dielectric layer over the second primer layer; and optionally a second protective layer over the third dielectric layer, wherein a thicknesses of the metallic layer of the first coating is in the range of about 50 Å to about 600 Å.

Clause 2: The coated article of clause 1, wherein the first portion consists of a non-viewing area of the vehicle windshield.

Clause 3: The coated article of clause 1, wherein the coated article is a vehicle windshield and the second coating is present over a non-viewing area of the vehicle windshield.

Clause 4: The coated article of any of clauses 1-3, wherein the first metallic layer has a thickness in the range of about 50 Å to about 600 Å, and the second metallic layer has a thickness in the range of about 50 Å to about 1000 Å, or even preferably in the range of about 75 to about 500, or even more preferably about 100 Å to about 400 Å. Here, as well as elsewhere in the specification and claims, individual numerical values can be combined to form additional, or even new/non-disclosed, numerical ranges.

Clause 5: The coated article of any of clauses 1-4, wherein the second coating further comprises a third metallic layer over the third dielectric layer or, if present, over the second protective layer; a third primer layer over the third metallic layer; a fourth dielectric layer over the third primer layer; a fourth metallic layer over the fourth dielectric layer; a fourth primer layer over the fourth metallic layer; a fifth dielectric layer over the fourth primer layer; and optionally a third protective layer positioned over the fifth dielectric layer.

Clause 6: The coated article of clause 5, wherein the second coating further comprises a fifth metallic layer over the fifth dielectric layer or, if present, over the third protective layer; a fifth primer layer over the fifth metallic layer; a sixth dielectric layer over the fifth primer layer; a sixth metallic layer over the sixth dielectric layer; a sixth primer layer over the sixth metallic layer; a seventh dielectric layer over the sixth primer layer; and optionally a fourth protective layer positioned over the seventh dielectric layer.

Clause 7: The coated article of clause 6, wherein the third metallic layer, the fourth metallic layer, the fifth metallic layer, and the sixth metallic layer each have a thickness in the range of about 50 Å to about 1000 Å, preferably in the range of about 75 Å to about 750 Å, or even more preferably in the range of about 100 Å to about 500 Å. Here, as well as elsewhere in the specification and claims, individual numerical values can be combined to form additional, or even new/non-disclosed, numerical ranges.

Clause 8: The coated article of any of clauses 1-7, wherein at least one of the first dielectric layer, the second dielectric layer, and/or the third dielectric layer comprises a zinc stannate film.

Clause 9: The coated article of clause 6, wherein at least one of the fourth dielectric layer, the fifth dielectric layer, the sixth dielectric layer, and/or the seventh dielectric layer comprises a zinc stannate film.

Clause 10: The coated article of any of clauses 1-9, wherein at least one of the metallic layers comprises at least one of silver, copper, gold, aluminum, mixtures thereof, or alloys thereof.

Clause 11: The coated article of any of clauses 1-10, wherein at least one of the first primer layer and/or the second primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 12: The coated article of clause 6, wherein at least one of the third primer layer, the fourth primer layer, the fifth primer layer, and/or the sixth primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 13: The coated article of any of clauses 1-12, wherein a portion of the coated article has a visible light transmittance of at least 70%.

Clause 14: The coated article of any of clauses 1-13, wherein at least a portion of the coated article has a visible light reflectance of not more than 20%.

Clause 15: The coated article of any of clauses 1-14, wherein the substrate is a glass substrate.

Clause 16: The coated article of any of clauses 1-15, wherein the coated article has a sheet resistance of not more than about 0.8 Ω/□ above the AS-1 Line, preferably not more than about 0.7 Ω/□ above the AS-1 Line, or most preferably not more than 0.6 Ω/□ above the AS-1 Line, and a sheet resistance of at least about 0.7 Ω/□ below the AS-1 Line, preferably at least about 0.9 Ω/□ below the AS-1 Line, most preferably at least about 1 Ω/□ below the AS-1 Line, with the caveat that the sheet resistance above the AS-1 Line must be less than the sheet resistance below the AS-1 Line. Here, as well as elsewhere in the specification and claims, individual numerical values can be combined to form additional, or even new/non-disclosed, numerical ranges.

Clause 17: The coated article of any of clauses 1-16, wherein the first protective layer and/or the second protective layer are formed from titanium dioxide or a titanium-containing film.

Clause 18: The coated article of clause 6, wherein the third protective layer and/or the fourth protective layer are formed from titanium dioxide or a titanium-containing film.

Clause 19: The coated article of clause 6, wherein the first protective film, the second protective film, the third protective layer, and the fourth protective are formed from a silicon-containing film.

Clause 20: The coated article of any of clauses 1-19, wherein the first metallic layer, the second metallic layer, the third metallic layer, the fourth metallic layer, the fifth metallic layer, and the sixth metallic layer comprise silver.

Clause 21: A vehicle transparency comprising a first substrate comprising a first surface and a second surface; a second substrate over at least a portion of the first substrate, comprising a third surface and a fourth surface, wherein the second surface is disposed facing the third surface, and wherein the second surface and third surface are separated by an interlayer; and a first coating deposited over either the second surface or the third surface, the first coating comprising a first dielectric layer over the substrate; a first metallic layer over the first dielectric layer; a first primer layer over the first metallic layer; a second dielectric layer over the first primer layer; and optionally a first protective layer over the second dielectric layer; and a second coating formed over a first portion of the first coating, the first portion comprising at least an area above an AS-1 Line, wherein the second coating comprises a second metallic layer over a portion of the second dielectric layer or, if present, a portion of the first protective layer; a second primer layer over the second metallic layer; a third dielectric layer over the second primer layer; and optionally a second protective layer over the third dielectric layer, wherein a thicknesses of the metallic layer of the first coating is in the range of about 50 Å to about 600 Å.

Clause 22: The vehicle transparency of clause 21, wherein the first portion consists of a non-viewing area of the vehicle windshield.

Clause 23: The vehicle transparency of clause 21, wherein the coated article is a vehicle windshield and the second coating is present over a non-viewing area of the vehicle windshield.

Clause 24: The vehicle transparency of any of clauses 21-23, wherein the first metallic layer has a thickness in the range of about 50 Å to about 600 Å, and the second metallic layer has a thickness in the range of about 50 Å to about 1000 Å, or even preferably in the range of about 75 to about 500, or even more preferably about 100 Å to about 400 Å. Here, as well as elsewhere in the specification and claims, individual numerical values can be combined to form additional, or even new/non-disclosed, numerical ranges.

Clause 25: The vehicle transparency of any of clauses 21-24, wherein the second coating further comprises a third metallic layer over the third dielectric layer or, if present, over the second protective layer; a third primer layer over the third metallic layer; a fourth dielectric layer over the third primer layer; a fourth metallic layer over the fourth dielectric layer; a fourth primer layer over the fourth metallic layer; a fifth dielectric layer over the fourth primer layer; and optionally a third protective layer positioned over the fifth dielectric layer.

Clause 26: The vehicle transparency of clause 25, wherein the second coating further comprises a fifth metallic layer over the fifth dielectric layer or, if present, over the third protective layer; a fifth primer layer over the fifth metallic layer; a sixth dielectric layer over the fifth primer layer; a sixth metallic layer over the sixth dielectric layer; a sixth primer layer over the sixth metallic layer; a seventh dielectric layer over the sixth primer layer; and optionally a fourth protective layer positioned over the seventh dielectric layer.

Clause 27: The vehicle transparency of clause 26, wherein the third metallic layer, the fourth metallic layer, the fifth metallic layer, and the sixth metallic layer each have a thickness in the range of about 50 Å to about 1000 Å, preferably in the range of about 75 Å to about 750 Å, or even more preferably in the range of about 100 Å to about 500 Å. Here, as well as elsewhere in the specification and claims, individual numerical values can be combined to form additional, or even new/non-disclosed, numerical ranges.

Clause 28: The vehicle transparency of any of clauses 21-27, wherein at least one of the first dielectric layer, the second dielectric layer, and/or the third dielectric layer comprises a zinc stannate film.

Clause 29: The vehicle transparency of clause 26, wherein at least one of the fourth dielectric layer, the fifth dielectric layer, the sixth dielectric layer, and/or the seventh dielectric layer comprises a zinc stannate film.

Clause 30: The vehicle transparency of any of clauses 21-29, wherein at least one of the metallic layers comprises at least one of silver, copper, gold, aluminum, mixtures thereof, or alloys thereof.

Clause 31: The vehicle transparency of any of clauses 21-30, wherein at least one of the first primer layer and/or the second primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 32: The vehicle transparency of clause 26, wherein at least one of the third primer layer, the fourth primer layer, the fifth primer layer, and/or the sixth primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 33: The vehicle transparency of any of clauses 21-32, wherein a portion of the coated article has a visible light transmittance of at least 70%.

Clause 34: The vehicle transparency of any of clauses 21-33, wherein at least a portion of the coated article has a visible light reflectance of not more than 20%.

Clause 35: The vehicle transparency of any of clauses 21-34, wherein the substrate is a glass substrate.

Clause 36: The vehicle transparency of any of clauses 21-35, wherein the coated article has a sheet resistance of not more than about 0.8 Ω/□ above the AS-1 Line, preferably not more than about 0.7 Ω/□ above the AS-1 Line, or most preferably not more than 0.6 Ω/□ above the AS-1 Line, and a sheet resistance of at least about 0.7 Ω/□ below the AS-1 Line, preferably at least about 0.9 Ω/□ below the AS-1 Line, most preferably at least about 1 Ω/□ below the AS-1 Line, with the caveat that the sheet resistance above the AS-1 Line must be less than the sheet resistance below the AS-1 Line. Here, as well as elsewhere in the specification and claims, individual numerical values can be combined to form additional, or even new/non-disclosed, numerical ranges.

Clause 37: The vehicle transparency of any of clauses 21-36, wherein the first protective layer and/or the second protective layer are formed from titanium dioxide or a titanium-containing film.

Clause 38: The vehicle transparency of clause 26, wherein the third protective layer and/or the fourth protective layer are formed from titanium dioxide or a titanium-containing film.

Clause 39: The vehicle transparency of clause 26, wherein the first protective film, the second protective film, the third protective layer, and the fourth protective are formed from a silicon-containing film.

Clause 40: The vehicle transparency of any of clauses 21-39, wherein the first metallic layer, the second metallic layer, the third metallic layer, the fourth metallic layer, the fifth metallic layer, and the sixth metallic layer comprise silver.

Clause 41: A method for forming a coated article, the method comprising the steps of providing a substrate, wherein the substrate comprises a first surface and a second surface; depositing a first coating over one of the first surface or the second surface of the substrate, the first coating comprising a first dielectric layer over the substrate; a first metallic layer over the first dielectric layer; a first primer layer over the first metallic layer; a second dielectric layer over the first primer layer; and optionally a first protective layer over the second dielectric layer; placing a mask over a portion of the first coating to yield a masked portion and an unmasked portion of the first coating; and depositing a second coating over a first portion of the unmasked portion of the first coating, the first portion comprising at least an area above an AS-1 Line, wherein the second coating comprises a second metallic layer over a portion of the second dielectric layer or, if present, a portion of the first protective layer; a second primer layer over the second metallic layer; a third dielectric layer over the second primer layer; and optionally a second protective layer over the third dielectric layer, wherein a thicknesses of the metallic layer of the first coating is in the range of about 50 Å to about 600 Å.

Clause 42: The method of clause 41, wherein the first portion consists of a non-viewing area of the vehicle windshield.

Clause 43: The method of clause 41, wherein the coated article is a vehicle windshield and the second coating is present over a non-viewing area of the vehicle windshield.

Clause 44: The method of any of clauses 41-43, wherein the first metallic layer has a thickness in the range of about 50 Å to about 600 Å, and the second metallic layer has a thickness in the range of about 50 Å to about 1000 Å, or even preferably in the range of about 75 to about 500, or even more preferably about 100 Å to about 400 Å. Here, as well as elsewhere in the specification and claims, individual numerical values can be combined to form additional, or even new/non-disclosed, numerical ranges.

Clause 45: The method of any of clauses 41-44, wherein the second coating further comprises a third metallic layer over the third dielectric layer or, if present, over the second protective layer; a third primer layer over the third metallic layer; a fourth dielectric layer over the third primer layer; a fourth metallic layer over the fourth dielectric layer; a fourth primer layer over the fourth metallic layer; a fifth dielectric layer over the fourth primer layer; and optionally a third protective layer positioned over the fifth dielectric layer.

Clause 46: The method of clause 45, wherein the second coating further comprises a fifth metallic layer over the fifth dielectric layer or, if present, over the third protective layer; a fifth primer layer over the fifth metallic layer; a sixth dielectric layer over the fifth primer layer; a sixth metallic layer over the sixth dielectric layer; a sixth primer layer over the sixth metallic layer; a seventh dielectric layer over the sixth primer layer; and optionally a fourth protective layer positioned over the seventh dielectric layer.

Clause 47: The method of clause 46, wherein the third metallic layer, the fourth metallic layer, the fifth metallic layer, and the sixth metallic layer each have a thickness in the range of about 50 Å to about 1000 Å, preferably in the range of about 75 Å to about 750 Å, or even more preferably in the range of about 100 Å to about 500 Å. Here, as well as elsewhere in the specification and claims, individual numerical values can be combined to form additional, or even new/non-disclosed, numerical ranges.

Clause 48: The method of any of clauses 41-47, wherein at least one of the first dielectric layer, the second dielectric layer, and/or the third dielectric layer comprises a zinc stannate film.

Clause 49: The method of clause 46, wherein at least one of the fourth dielectric layer, the fifth dielectric layer, the sixth dielectric layer, and/or the seventh dielectric layer comprises a zinc stannate film.

Clause 50: The method of any of clauses 41-49, wherein at least one of the metallic layers comprises at least one of silver, copper, gold, aluminum, mixtures thereof, or alloys thereof.

Clause 51: The method of any of clauses 41-50, wherein at least one of the first primer layer and/or the second primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 52: The method of clause 46, wherein at least one of the third primer layer, the fourth primer layer, the fifth primer layer, and/or the sixth primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 53: The method of any of clauses 41-52, wherein a portion of the coated article has a visible light transmittance of at least 70%.

Clause 54: The method of any of clauses 41-53, wherein at least a portion of the coated article has a visible light reflectance of not more than 20%.

Clause 55: The method of any of clauses 41-54, wherein the substrate is a glass substrate.

Clause 56: The method of any of clauses 41-55, wherein the coated article has a sheet resistance of not more than about 0.8 Ω/□ above the AS-1 Line, preferably not more than about 0.7 Ω/□ above the AS-1 Line, or most preferably not more than 0.6 Ω/□ above the AS-1 Line, and a sheet resistance of at least about 0.7 Ω/□ below the AS-1 Line, preferably at least about 0.9 Ω/□ below the AS-1 Line, most preferably at least about 1 Ω/□ below the AS-1 Line, with the caveat that the sheet resistance above the AS-1 Line must be less than the sheet resistance below the AS-1 Line. Here, as well as elsewhere in the specification and claims, individual numerical values can be combined to form additional, or even new/non-disclosed, numerical ranges.

Clause 57: The method of any of clauses 41-56, wherein the first protective layer and/or the second protective layer are formed from titanium dioxide or a titanium-containing film.

Clause 58: The method of clause 46, wherein the third protective layer and/or the fourth protective layer are formed from titanium dioxide or a titanium-containing film.

Clause 59: The method of clause 46, wherein the first protective film, the second protective film, the third protective layer, and the fourth protective are formed from a silicon-containing film.

Clause 60: The method of any of clauses 41-59, wherein the first metallic layer, the second metallic layer, the third metallic layer, the fourth metallic layer, the fifth metallic layer, and the sixth metallic layer comprise silver.

Clause 61: A method for forming a vehicle transparency, the method comprising the steps of providing a first substrate, the first substrate comprising a first surface and a second surface; providing an interlayer; providing a second substrate, the second substrate comprising a third surface and a fourth surface; laminating the first substrate, the interlayer, and the second substrate together, wherein the second surface of the first substrate is disposed to face the third surface of the second substrate, and wherein the second surface of the first substrate and third surface of the second substrate are separated by the interlayer; bending the first substrate, the interlayer, and the second substrate into a desired shape, wherein the bending step can be conducted either after the lamination step or before the lamination step, wherein a first coating is deposited over either the second surface or the third surface, the first coating comprising a first dielectric layer over the substrate; a first metallic layer over the first dielectric layer; a first primer layer over the first metallic layer; a second dielectric layer over the first primer layer; and optionally a first protective layer over the second dielectric layer; and depositing a second coating over a first portion of the first coating, the first portion comprising at least an area above an AS-1 Line, wherein the second coating comprises a second metallic layer over a portion of the second dielectric layer or, if present, a portion of the first protective layer; a second primer layer over the second metallic layer; a third dielectric layer over the second primer layer; and optionally a second protective layer over the third dielectric layer, wherein a thicknesses of the metallic layer of the first coating is in the range of about 50 Å to about 600 Å.

Clause 62: The method of clause 61, wherein the first portion consists of a non-viewing area of the vehicle windshield.

Clause 63: The method of clause 61, wherein the coated article is a vehicle windshield and the second coating is present over a non-viewing area of the vehicle windshield.

Clause 64: The method of any of clauses 61-63, wherein the first metallic layer has a thickness in the range of about 50 Å to about 600 Å, and the second metallic layer has a thickness in the range of about 50 Å to about 1000 Å, or even preferably in the range of about 75 to about 500, or even more preferably about 100 Å to about 400 Å. Here, as well as elsewhere in the specification and claims, individual numerical values can be combined to form additional, or even new/non-disclosed, numerical ranges.

Clause 65: The method of any of clauses 61-64, wherein the second coating further comprises a third metallic layer over the third dielectric layer or, if present, over the second protective layer; a third primer layer over the third metallic layer; a fourth dielectric layer over the third primer layer; a fourth metallic layer over the fourth dielectric layer; a fourth primer layer over the fourth metallic layer; a fifth dielectric layer over the fourth primer layer; and optionally a third protective layer positioned over the fifth dielectric layer.

Clause 66: The method of clause 65, wherein the second coating further comprises a fifth metallic layer over the fifth dielectric layer or, if present, over the third protective layer; a fifth primer layer over the fifth metallic layer; a sixth dielectric layer over the fifth primer layer; a sixth metallic layer over the sixth dielectric layer; a sixth primer layer over the sixth metallic layer; a seventh dielectric layer over the sixth primer layer; and optionally a fourth protective layer positioned over the seventh dielectric layer.

Clause 67: The method of clause 66, wherein the third metallic layer, the fourth metallic layer, the fifth metallic layer, and the sixth metallic layer each have a thickness in the range of about 50 Å to about 1000 Å, preferably in the range of about 75 Å to about 750 Å, or even more preferably in the range of about 100 Å to about 500 Å. Here, as well as elsewhere in the specification and claims, individual numerical values can be combined to form additional, or even new/non-disclosed, numerical ranges.

Clause 68: The method of any of clauses 61-67, wherein at least one of the first dielectric layer, the second dielectric layer, and/or the third dielectric layer comprises a zinc stannate film.

Clause 69: The method of clause 66, wherein at least one of the fourth dielectric layer, the fifth dielectric layer, the sixth dielectric layer, and/or the seventh dielectric layer comprises a zinc stannate film.

Clause 70: The method of any of clauses 61-69, wherein at least one of the metallic layers comprises at least one of silver, copper, gold, aluminum, mixtures thereof, or alloys thereof.

Clause 71: The method of any of clauses 61-70, wherein at least one of the first primer layer and/or the second primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 72: The method of clause 66, wherein at least one of the third primer layer, the fourth primer layer, the fifth primer layer, and/or the sixth primer layer are selected from titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof, and wherein the primer is deposited as a metal and subsequently oxidized.

Clause 73: The method of any of clauses 61-72, wherein a portion of the coated article has a visible light transmittance of at least 70%.

Clause 74: The method of any of clauses 61-73, wherein at least a portion of the coated article has a visible light reflectance of not more than 20%.

Clause 75: The method of any of clauses 61-74, wherein the substrate is a glass substrate.

Clause 76: The method of any of clauses 61-75, wherein the coated article has a sheet resistance of not more than about 0.8 Ω/□ above the AS-1 Line, preferably not more than about 0.7 Ω/□ above the AS-1 Line, or most preferably not more than 0.6 Ω/□ above the AS-1 Line, and a sheet resistance of at least about 0.7 Ω/□ below the AS-1 Line, preferably at least about 0.9 Ω/□ below the AS-1 Line, most preferably at least about 1 Ω/□ below the AS-1 Line, with the caveat that the sheet resistance above the AS-1 Line must be less than the sheet resistance below the AS-1 Line. Here, as well as elsewhere in the specification and claims, individual numerical values can be combined to form additional, or even new/non-disclosed, numerical ranges.

Clause 77: The method of any of clauses 61-76, wherein the first protective layer and/or the second protective layer are formed from titanium dioxide or a titanium-containing film.

Clause 78: The method of clause 66, wherein the third protective layer and/or the fourth protective layer are formed from titanium dioxide or a titanium-containing film.

Clause 79: The method of clause 66, wherein the first protective film, the second protective film, the third protective layer, and the fourth protective are formed from a silicon-containing film.

Clause 80: The method of any of clauses 61-79, wherein the first metallic layer, the second metallic layer, the third metallic layer, the fourth metallic layer, the fifth metallic layer, and the sixth metallic layer comprise silver.

Clause 81: A vehicle comprising at least one coated article according to any of clauses 1-20.

Clause 82: A vehicle comprising at least one vehicle transparency according to any one of clauses 21-40.

### BRIEF DESCRIPTION OF THE DRAWINGS

FIG. 1 is a schematic view (not to scale) of a windshield incorporating features of the invention;
FIG. 2 is an expanded view (not to scale) of the windshield taken along the line II-II of FIG. 1;
FIG. 3A is a cross-sectional view (not to scale) of a non-limiting coating according to the invention;
FIG. 3B is a cross-sectional view (not to scale) of a non-limiting coating according to the invention;
FIG. 4A is a cross-sectional view (not to scale) of a non-limiting coating according to the invention;
FIG. 4B is a cross-sectional view (not to scale) of a non-limiting coating according to the invention;
FIG. 5A is cross-sectional views (not to scale) of non-limiting first dielectric layer embodiment according to the invention;
FIG. 5B is cross-sectional views (not to scale) of non-limiting first dielectric layer embodiment according to the invention;
FIG. 6A is a cross-sectional view (not to scale) of a non-limiting coating according to the invention that, in some embodiments, is present above the AS-1 Line of a windshield substate; and
FIG. 6B is a cross-sectional view (not to scale) of a non-limiting coating according to the invention that, in some embodiments, is present above the AS-1 Line of a windshield substate.

### DETAILED DESCRIPTION OF THE INVENTION

For purposes of the description hereinafter, the terms "end", "upper", "lower", "right", "left", "vertical", "horizontal", "top", "bottom", "lateral", "longitudinal", and derivatives thereof shall relate to the invention as it is oriented in the drawing figures. However, it is to be understood that the invention may assume various alternative variations and step sequences, except where expressly specified to the contrary. It is also to be understood that the specific devices and processes illustrated in the attached drawings, and described in the following specification, are simply exemplary embodiments or aspects of the invention. Hence, specific dimensions and other physical characteristics related to the embodiments or aspects disclosed herein are not to be considered as limiting.

Moreover, other than in any operating examples, or where otherwise indicated, all numbers used in the specification and claims are to be understood as being modified in all instances by the term "about". Accordingly, unless indicated to the contrary, the numerical parameters set forth in the following specification and attached claims are approximations that can vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

It should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

With respect to coating layers described herein, the term "over" means farther from the substrate on which the coating layer is positioned. For example, a second layer positioned "over" a first layer means that the second layer is positioned farther from the substrate than is the first layer. The second layer can be in direct contact with the first layer. Alternatively, one or more other layers can be positioned between the first layer and the second layer.

The term "film" means a region having a distinct composition. A "layer" can include one or more "films". A "coating" can include one or more "layers".

The terms "polymer" or "polymeric" include oligomers, homopolymers, copolymers, and terpolymers, e.g., polymers formed from two or more types of monomers or polymers.

The term "ultraviolet radiation" means electromagnetic radiation having a wavelength in the range of 100 nm to less than 300 nm. The term "visible radiation" means electromagnetic radiation having a wavelength in the range of 380 nm to 780 nm. The term "infrared radiation" means electromagnetic radiation having a wavelength in the range of greater than 780 nm to 100,000 nm. The term "solar infrared radiation" means electromagnetic radiation having a wavelength in the range of 1,000 nm to 3,000 nm. The term "thermal infrared radiation" means electromagnetic radiation having a wavelength in the range of greater than 3,000 nm to 20,000 nm.

The terms "metal" and "metal oxide" include silicon and silica, respectively, as well as traditionally recognized metals and metal oxides, even though silicon conventionally may not be considered a metal. By "at least" is meant "greater than or equal to". By "not greater than" is meant "less than or equal to". The term "includes" is synonymous with "comprises".

The discussion of the invention may describe certain features as being "particularly" or "preferably" within certain limitations (e.g., "preferably", "more preferably", or "even more preferably", within certain limitations). It is to be understood that the invention is not limited to these particular or preferred limitations but encompasses the entire scope of the disclosure.

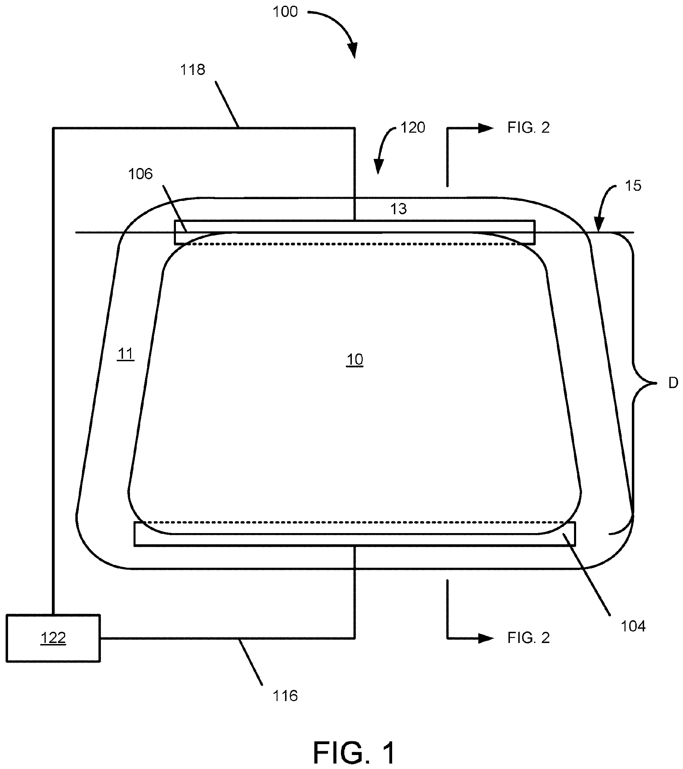

Given the above, in one embodiment, the present invention relates to a heatable windshield according to the present invention comprises a substrate having a first coating formed over the substrate, the first coating comprising various dielectric, metallic, and primer layers; and a second coating formed over at least a portion of the first coating, the second coating being located above an AS-1 Line (see, e.g., line 15 in FIG. 1) and comprising dielectric, metallic, and primer layers.

It should be noted that as used herein, the term "AS-1 Line" means the demarcation line on the front of a vehicle windshield above which tint, or some other application or structure, can be placed even though such tint, or other item, interferes with the amount of visible light transmitted through the windshield in such an area. While not wishing to be bound to any one embodiment, the AS-1 Line typically extends 5 inches from top of a vehicle windshield. Additionally, another demarcation line similar to the AS-1 Line exists at the bottom of a vehicle windshield, and such tint, or other application, can also be placed at the bottom of a vehicle windshield without interfering with the required amount of visible light, or other light, transmission required for a vehicle windshield application. Outside of the United States the term AS-1 Line is not typically used to describe the top portion of a vehicle windshield as discussed above. Rather, outside of the United States an imaginary line similar to the AS-1 line exists where above such a line a vehicle windshield is not subject to any minimum light transmittance requirement. Outside of the United States such an imaginary line above which a vehicle windshield is not subject to any minimum light transmittance may exist at about 5 inches from the top of a vehicle windshield, about 4.5 inches from the top of a vehicle windshield, about 4 inches from the top of a vehicle windshield, about 3.5 inches from the top of a vehicle windshield, about 3 inches from the top of a vehicle windshield, about 2.5 inches from the top of a vehicle windshield, about, or even about 2 inches from the top of a vehicle windshield. For the purposes of the present invention these imaginary lines are collectively referred to as AS-1 lines regardless of whether or not such a term is used in connection with vehicle windshield requirements of any specific country or region.

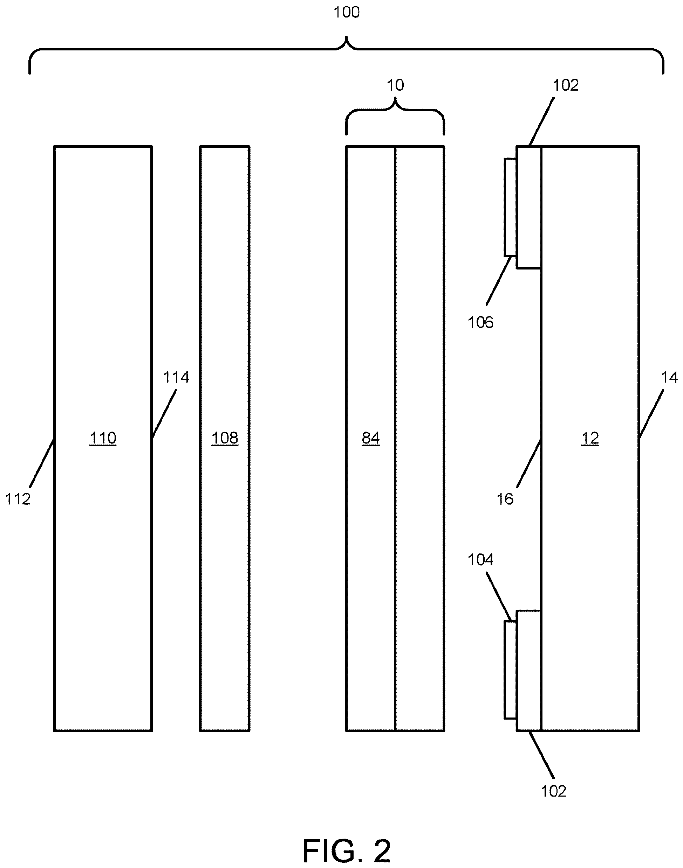

A non-limiting heatable transparency 100 (e.g., automotive windshield) incorporating features of the invention is illustrated in FIGS. 1 and 2. The transparency 10 can have any desired visible light, infrared radiation, or ultraviolet radiation transmission and reflection. For example, the transparency 100 can have a visible light transmission of any desired amount, e.g., greater than 0% to 100%, e.g., greater than 70%. For windshield and front sidelight areas in the United States, the visible light transmission is typically greater than or equal to 70%. For privacy areas, such as rear seat sidelights and rear windows, the visible light transmission can be less than that for windshields, such as less than 70%.

As seen in FIG. 2, transparency 100 includes a first ply or first substrate 12 with a first major surface facing the vehicle exterior, i.e., an outer major surface 14 (No. 1 surface) and an opposed second or inner major surface 16 (No. 2 surface). Transparency 100 also includes a second ply or second substrate 110 having an outer (first) major surface 112 (No. 4 surface) and an inner (second) major surface 114 (No. 3 surface). This numbering of the ply surfaces is in keeping with conventional practice in the automotive arts. First and second plies 12, 110 can be bonded together in any suitable manner, such as by a conventional interlayer 108. Although not required, a conventional edge sealant can be applied to the perimeter of laminated transparency 100 during and/or after lamination in any desired manner. A decorative band, e.g., an opaque, translucent or colored shade band 102 (shown in FIG. 2), such as a ceramic band, can be provided on a surface of at least one of the plies 12, 110, for example around the perimeter of inner major surface 16 of first ply 12. An electrically conductive coating 10 (also referred to as a first coating 10) is formed over at least a portion, or even more ideally over all, of one of plies 12, 110, such as over the No. 2 surface 16 or No. 3 surface 114. A bus bar assembly 120 (FIG. 1) is in electrical contact with conductive coating 10. Bus bar assembly 120 is also connected to an electrical power source 122 (FIG. 1) and will be discussed in more detail below. In one non-limiting aspect of the invention, power source 122 can be a conventional vehicle alternator, e.g., configured to supply approximately 14 volts. Thus, in the practice of one non-limiting embodiment of the invention, no DC to DC power converter is present. In one non-limiting embodiment, power source 122 can be a 42 volt DC alternator or a DC to DC converter can be added to step-up the voltage from a 14 volt alternator to a sufficient level, e.g., 42 volts DC.

In the broad practice of the invention, plies 12, 110 of transparency 100 can be of the same or different materials. Plies 12, 110 can include any desired material having any desired characteristics. For example, one or more of plies 12, 110 can be transparent or translucent to visible light. By "transparent" is meant having visible light transmittance of greater than 0% to 100%. Alternatively, one or more of plies 12, 110 can be translucent. By "translucent" is meant allowing electromagnetic energy (e.g., visible light) to pass through but diffusing this energy such that objects on the side opposite the viewer are not clearly visible. Examples of suitable materials include, but are not limited to, plastic substrates (such as acrylic polymers, such as polyacrylates; polyalkylmethacrylates, such as polymethylmethacrylates, polyethylmethacrylates, polypropylmethacrylates, and the like; polyurethanes; polycarbonates; polyalkylterephthalates, such as polyethyleneterephthalate (PET), polypropyleneterephthalates, polybutylene-terephthalates, and the like; polysiloxane-containing polymers; or copolymers of any monomers for preparing these, or any mixtures thereof); ceramic substrates; glass substrates; or mixtures or combinations of any of the above. For example, one or more of plies 12, 110 can include conventional soda-lime-silicate glass, borosilicate glass, or leaded glass. The glass can be clear glass. By "clear glass" is meant non-tinted or non-colored glass. Alternatively, the glass can be tinted or otherwise colored glass. The glass can be annealed or heat-treated glass. As used herein, the term "heat treated" means tempered or at least partially tempered. The glass can be of any type, such as conventional float glass, and can be of any composition having any optical properties, e.g., any value of visible transmission, ultraviolet transmission, infrared transmission, and/or total solar energy transmission.

By "float glass" is meant glass formed by a conventional float process in which molten glass is deposited onto a molten metal bath and controllably cooled to form a float glass ribbon. The ribbon is then cut and/or shaped and/or heat treated as desired. Examples of float glass processes are disclosed in U.S. Pat. Nos. 4,466,562 and 4,671,155. First and second plies 12, 110 can each be, for example, clear float glass or can be tinted or colored glass or one ply 12, 110 can be clear glass and the other ply 12, 110 colored glass. Although not limiting to the invention, examples of glass suitable for first ply 12 and/or second ply 110 are described in U.S. Pat. Nos. 4,746,347; 4,792,536; 5,030,593; 5,030,594; 5,240,886; 5,385,872; and 5,393,593. First and second plies 12, 18 can be of any desired dimensions, e.g., length, width, shape, or thickness. In one exemplary automotive transparency, the first and second plies can each be 1 mm to 10 mm thick, e.g., 1 mm to 5 mm thick, or 1.5 mm to 2.5 mm, or 1.8 mm to 2.3 mm. In one non-limiting embodiment, first ply 12 and/or second ply 110 can have a visible light transmittance of greater than 90%, such as greater than 91 %, at a reference wavelength of 550 nm. The glass composition for first ply 12 and/or second ply 110 can have a total iron content in the range of greater than 0 wt. % to 0.2 wt. % and/or a redox ratio in the range of 0.3 to 0.6.

In one non-limiting embodiment, one or both of plies 12, 110 may have a high visible light transmittance at a reference wavelength of 550 nanometers (nm). By "high visible light transmittance" is meant visible light transmittance at 550 nm greater than or equal to 85%, such as greater than or equal to 87%, such as greater than or equal to 90%, such as greater than or equal to 91 %, such as greater than or equal to 92%, at 5.5 mm equivalent thickness for glass from 2 mm to 25 mm sheet thickness. Particularly useful glass for the practice of the invention is disclosed in U.S. Pat. Nos. 5,030,593 and 5,030,594.

Interlayer 108 can be of any desired material and can include one or more layers or plies. Interlayer 108 can be a polymeric or plastic material, such as, for example, polyvinylbutyral, plasticized polyvinyl chloride, or multi-layered thermoplastic materials including polyethyleneterephthalate, etc. Suitable interlayer materials are disclosed, for example but not to be considered as limiting, in U.S. Pat. Nos. 4,287,107 and 3,762,988. Interlayer 108 secures first and second plies 12, 110 together, provides energy absorption, reduces noise, and increases the strength of the laminated structure. Interlayer 108 can also be a sound absorbing or attenuating material as described, for example, in U.S. Pat. No. 5,796,055. Interlayer 108 can have a solar control coating provided thereon or incorporated therein or can include a colored material to reduce solar energy transmission.

Coating 10 is an electrically conductive coating deposited over at least a portion of a major surface of one of glass plies 12, 110, such as on inner surface 16 of outboard glass ply 12 (FIG. 1) or outer surface 112 of inner glass ply 110. Conductive coating 10 (or first coating 10) can include at least one metallic film positioned between dielectric layers applied sequentially over typically one or more of glass plies 12, 110. However, it should be noted that conductive coating 10 (or first coating 10) could be applied over only a portion of one or more of glass plies 12, 110 if only a portion of one or more of glass plies 12, 110 are desired to be treated with conductive coating 10. Conductive coating 10 can be a heat and/or radiation reflecting coating and can have one or more coating layers or films of the same or different composition and/or functionality. As used herein, the term "film" refers to a coating region of a desired or selected coating composition. A "layer" can comprise one or more "films" and a "coating" or "coating stack" can comprise one or more "layers". In another embodiment, if so desired, conductive coating 10 (or first coating 10) can be a multi-layer coating include two, three, or even four additional metallic layers.

In one non-limiting embodiment illustrated in FIGS. 1 and 2, bus bar assembly 120 includes a first or bottom bus bar 104 and a second or top bus bar 106 formed on the inner surface 16 of outer ply 12 and separated by a bus bar to bus bar distance D. Bus bars 104, 106 are in electrical contact with conductive coating 10 (also referred to herein as "first conductive coating 10" and denoted by the inner rounded trapezoid shape of FIG. 1). Bus bar assembly 120 also includes a first conductive lead or strip 116 connected to first bus bar 104 and a second conductive lead or strip 118 connected to second bus bar 106. Each of leads 116, 118 is connected to power source 122. Bus bars 104, 106 and/or conductive strips 116, 118 can be formed of conductive metal foil or strips (such as but not limited to copper foil or tinned copper foil), or can be formed by conductive coatings (such as ceramic coatings), or combinations thereof. In one non-limiting embodiment of the invention, bus bars 104 and 106 can be positioned at least partially on, or completely on, decorative band 102 (as shown in FIG. 2).

Alternatively, in another embodiment, conductive coating 10 (or first coating 10) can cover substrate 11 (i.e., covering one of plies 12, 110). In this embodiment, bus bars 104, 106 and conductive strips 116, 118 can be located at the upper and lower edges of substrate 11.

The power source 122 can be any conventional power source. However, in one non-limiting embodiment, the power source 122 is a conventional vehicle alternator configured to supply in the range of 13 volts to 15 volts, e.g., approximately 14 volts.

In one non-limiting embodiment of the invention, conductive coating 10 (or first conductive coating 10) is configured or dimensioned to provide a power density of 2 to 10 watts per decimeter (W/dm²) at a bus bar to bus bar distance D (see FIG. 1) in the range of 24 inches to 30 inches (60 cm to 75 cm), such as 4 to 8 W/dm², such as 5 to 6 W/dm², when the coating is in electrical contact with a conventional vehicle alternator, such as a conventional alternator producing 80 amps and 14 volts. It is believed that such a power density is sufficient to melt ice found in contact with outer surface 14 of the substrate 12. For vision panels (such as a windshield) in the United States, the transparency should also have a visible light transmittance of greater than or equal to 70%, such as greater than or equal to 71%. As will be appreciated by one skilled in the art, several different competing factors need to be balanced to provide a coating having sufficient conductivity and also sufficient transmittance. For example, as the distance D between the bus bars increases (i.e., the transparency becomes wider from top to bottom), the bus bar to bus bar resistance increases. As the bus bar to bus bar resistance increases, the power density decreases. In order to maintain the power density as the bus bar to bus bar distance is increased, the resistivity of the coating must decrease. One way of decreasing the resistivity is by increasing the thickness of one or more of the silver layers and/or by increasing the number of silver layers.

In one non-limiting practice of the invention, the thickness and/or number of silver layers is configured to give a total resistivity for conductive coating 10 (or first conductive coating 10) of 0.6 to 1.5 ohms per square (Ω/□), such as 0.6 to 1.0 ohms per square (Ω/□), such as 0.6 to 0.9 ohms per square (Ω/□). In one non-limiting practice of the invention, the thickness and/or number of silver layers is configured to give a total resistivity for the coating not more than 0.850 ohms per square (Ω/□), such as not more than 0.800 ohms per square (Ω/□), such as not more than 0.695 ohms per square (Ω/□). However, as will also be appreciated by one skilled in the art, as the number or thickness of the silver layers increases, the visible light transmittance decreases. For forward vision areas of a vehicle, such as a windshield, the thickness and/or number of silver layers should not be increased to the point where visible light transmittance of the vision area falls below about 70%.

In another embodiment, where one of plies 12, 110 is completely covered with conductive coating 10 (or first conductive coating 10), a second coating 13 (or second conductive coating 13) can be formed in at least one border portion of one of plies 12, 110, for example, about the AS-1 Line of such a ply (see, e.g., line 15 in FIG. 1). In this embodiment, the coated article of the present invention has a sheet resistance of not more than about 0.8 Ω/□ above the AS-1 Line (i.e., for the portion of the substrate that has both first coating 10 and second coating 13 thereover), not more than about 0.7 Ω/□ above the AS-1 Line (i.e., for the portion of the substrate that has both first coating 10 and second coating 13 thereover), or even not more than 0.6 Ω/□ above the AS-1 Line (i.e., for the portion of the substrate that has both first coating 10 and second coating 13 thereover), and a sheet resistance of at least about 0.65 Ω/□ below the AS-1 Line (i.e., for the portion of the substrate that has only first coating 10 thereover), at least about 0.7 Ω/□ below the AS-1 Line (i.e., for the portion of the substrate that has only first coating 10 thereover), at least about 0.8 Ω/□ below the AS-1 Line (i.e., for the portion of the substrate that has only first coating 10 thereover), at least about 0.9 Ω/□ below the AS-1 Line (i.e., for the portion of the substrate that has only first coating 10 thereover), or even at least about 1 Ω/□ below the AS-1 Line (i.e., for the portion of the substrate that has only first coating 10 thereover), with the caveat that the sheet resistance above the AS-1 Line (that is line 15 of FIG. 1) must be less than the sheet resistance below the AS-1 Line. Here, as well as elsewhere in the specification and claims, individual numerical values can be combined to form additional, or even new/non-disclosed, numerical ranges.

Non-limiting examples of suitable conductive coatings typically include one or more antireflective coating films comprising dielectric or anti-reflective materials, such as metal oxides or oxides of metal alloys, which are transparent to visible light. Conductive coating 10 can also include two, three or four metallic layers, or even five, six, or seven or more metallic layers, comprising a reflective metal, e.g., a noble metal such as gold, copper or silver, or combinations or alloys thereof, and can further comprise a primer layer or barrier film, such as titanium or a titanium aluminum alloy, as is known in the art, located over and/or optionally under the metal reflective layer. In other embodiment, the conductive coating 10 can have exactly one, two, three, or even four metallic layers; or can have exactly five, six, or even seven or more metallic layers. For example, conductive coating 10 comprises of one metallic layer along with other attendant layers such as one or more first dielectric layers, one or more primer layers, and optionally a first protective layer, where such a conduction coating 10 (or in terms of the various embodiments also disclosed herein first coating 10) is deposited over a substrate such as a vehicle windshield. In one non-limiting embodiment, one or more of the metallic layers can comprise silver.

Conductive coating 10 (or first conductive coating 10) can be deposited by any conventional method, such as but not limited to conventional chemical vapor deposition (CVD) and/or physical vapor deposition (PVD) methods. Examples of CVD processes include spray pyrolysis. Examples of PVD processes include electron beam evaporation and vacuum sputtering (such as magnetron sputter vapor deposition (MSVD)). Other coating methods could also be used, such as but not limited to sol-gel deposition. In one non-limiting embodiment, conductive coating 10 (or first conductive coating 10) can be deposited by MSVD. Examples of MSVD coating devices and methods will be well understood by one of ordinary skill in the art and are described, for example, in U.S. Pat. Nos. 4,379,040; 4,861,669; 4,898,789; 4,898,790; 4,900,633; 4,920,006; 4,938,857; 5,328,768; and 5,492,750.

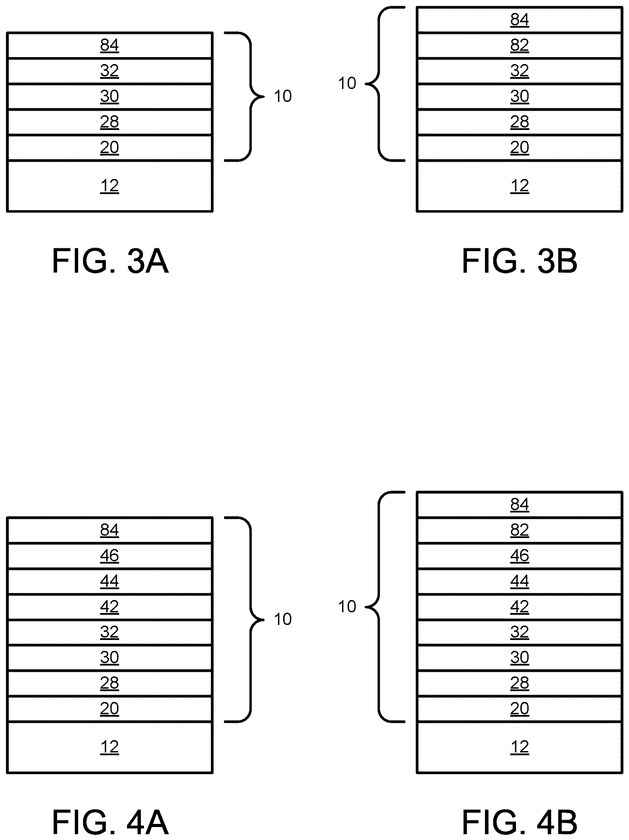

A non-limiting coating suitable for the invention is shown in FIG. 3A. This coating, conductive coating 10 (or first conductive coating 10), includes one metallic layer and one primer layer positioned in between two dielectric layers. It includes a base layer or first dielectric layer 20 positioned over, or in direct contact with, at least a portion, or all, of a major surface of a substrate (e.g., the No. 2 surface 16 of first ply 12, or the No. 3 surface 114 of second ply 110). A first metallic layer 28 is positioned over, or in direct contact with, at least a portion, or all, of first dielectric layer 20. A first primer layer 30 is positioned over, or in direct contact with, at least a portion, or all, of first metallic layer 28. A second dielectric layer 32 is positioned over, or in direct contact with, at least a portion, or all, of first primer layer 30. An optional protective layer 84 is positioned over, or in direct contact with, at least a portion, or all, of second dielectric layer 32. When protective layer 84 is present, an optional stress layer 82 can be positioned between second dielectric layer 32 and protective layer 84 (see FIG. 3B).

Another non-limiting coating suitable for the invention is shown in FIGS. 4A and 4B. This coating is an alternative embodiment for conductive coating 10 (or first conductive coating 10) and includes two metallic layers and two primer layers positioned in between the two dielectric layers. It includes a base layer or first dielectric layer 20 positioned over, or in direct contact with, at least a portion, or all, of a major surface of a substrate (e.g., the No. 2 surface 16 of the first ply 12, or the No. 3 surface 114 of the second ply 110). A first metallic layer 28 is positioned over, or in direct contact with, at least a portion, or all, of first dielectric layer 20. A first primer layer 30 is positioned over, or in direct contact with, at least a portion, or all, of first metallic layer 28. A second dielectric layer 32 is positioned over, or in direct contact with, at least a portion, or all, of first primer layer 30. A second metallic layer 42 is positioned over, or in direct contact with, at least a portion, or all, of second dielectric layer 32. A second primer layer 44 is positioned over, or in direct contact with, at least a portion, or all, of second metallic layer 42. A third dielectric layer 46 is positioned over, or in direct contact with, at least a portion, or all, of second primer layer 44. An optional protective layer 84 is positioned over, or in direct contact with, at least a portion, or all, of third dielectric layer 46. When protective layer 84 is present, an optional stress layer 82 can be positioned between third dielectric layer 46 and protective layer 84 (see FIG. 4B).

It should be noted that conductive coating 10 (or first conductive coating 10) can further contain additional layers such as those disclosed in various embodiments of United States Patent Application Publication No. 2023/0221466, the complete disclosure of which is hereby incorporated by reference in its entirety.

First dielectric layer 20 can comprise one or more films of antireflective materials and/or dielectric materials, such as but not limited to metal oxides, oxides of metal alloys, nitrides, oxynitrides, or mixtures thereof. First dielectric layer 20 can be transparent to visible light. Examples of suitable metal oxides for first dielectric layer 20 include oxides of titanium, hafnium, zirconium, niobium, zinc, bismuth, lead, indium, tin, silicon, gallium, vanadium, and mixtures thereof. These metal oxides can have small amounts of other materials, such as manganese in bismuth oxide, tin in indium oxide, etc. Alternatively, oxides of metal alloys or metal mixtures, such as oxides containing zinc and tin (e.g., zinc stannate); oxides of indium-tin alloys; silicon nitrides; silicon aluminum nitrides; or aluminum nitrides can be used. Further, doped metal oxides, such as antimony or indium doped tin oxides or nickel or boron doped silicon oxides, can be used. In one non-limiting embodiment, first sub-dielectric film 22, of dielectric layer 20, can be a zinc/tin alloy oxide. The zinc/tin alloy oxide can be obtained from magnetron sputtering vacuum deposition from a cathode of zinc and tin that can comprise zinc and tin in proportions of 10 wt. % to 90 wt. % zinc and 90 wt. % to 10 wt. % tin. One suitable metal alloy oxide that can be present in first sub-dielectric film 22 is zinc stannate. By "zinc stannate" is meant a composition of ZnₓSn₁₋ₓO₂₋ₓ (Formula 1) where "x" varies in the range of greater than 0 to less than 1. For instance, "x" can be greater than 0 and can be any fraction or decimal between greater than 0 to less than 1. For example where x = 2/3, Formula 1 is Zn_{2/3}Sn_{1/3}O_{4/3}, which is more commonly described as Zn₂SnO₄. A zinc stannate containing film has one or more of the forms of Formula 1 in a predominant amount in the film.

A second sub-dielectric film 24, of dielectric layer 20, can be a zinc-containing film, such as zinc oxide. The zinc oxide film can be deposited from a zinc cathode that includes other materials to improve the sputtering characteristics of the cathode. For example, the zinc cathode can include a small amount (e.g., less than 10 wt. %, such as greater than 0 to 5 wt. %) of tin to improve sputtering. In which case, the resultant zinc oxide film would include a small percentage of tin oxide, e.g., 0 to less than 10 wt. % tin oxide, e.g., 0 to 5 wt. % tin oxide. An oxide layer sputtered from a zinc/tin cathode having ninety-five percent zinc and five percent tin is written as Zn_{0.95}S_{0.5}O_{1.05} herein and is referred to as a zinc oxide film. The small amount of tin in the cathode (e.g., less than 10 wt. %) is believed to form a small amount of tin oxide in the predominantly zinc oxide-containing second sub-dielectric film 24. In one non-limiting embodiment in which first sub-dielectric film 22 is zinc stannate and second sub-dielectric film 24 is zinc oxide (Zn_{0.95}Sn_{0.5}O_{1.05}).

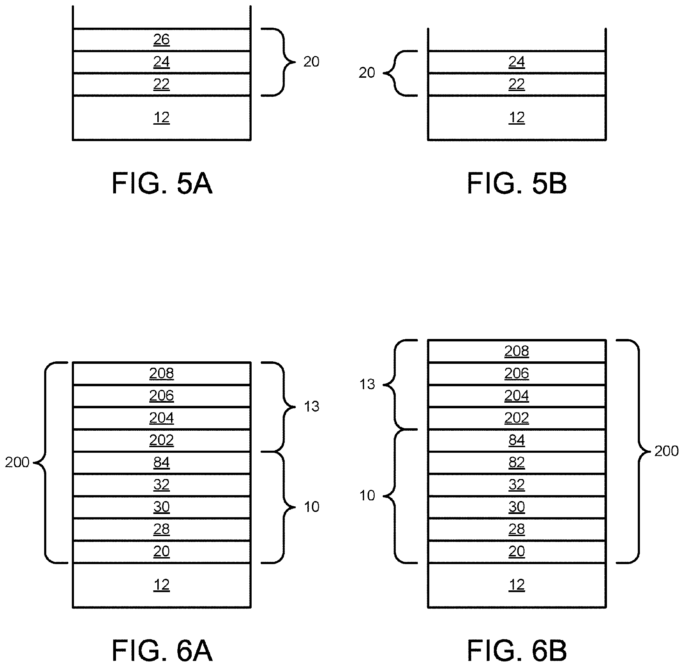

In an exemplary non-limiting embodiment, second sub-dielectric film 24 is a film consisting of at least one of the following aluminum zinc oxide, gallium zinc oxide, indium zinc oxide, indium tin oxide, or vanadium zinc oxide. The aluminum zinc oxide, gallium zinc oxide, indium zinc oxide, indium tin oxide, or vanadium zinc oxide film is deposited from a zinc cathode that includes other material to improve the sputtering characteristics of the cathode. For example, the aluminum zinc oxide, gallium zinc oxide, indium zinc oxide, indium tin oxide, or vanadium zinc oxide film can include an additional small amount (e.g., less than 10 wt. %, such as greater than 0 to 5 wt. %) of tin to improve sputtering. The small amount of tin in the cathode (e.g., less than 10 wt. %) is believed to form a small amount of tin oxide in second sub-dielectric film 24. In one non-limiting embodiment, first sub-dielectric film 22 comprises zinc stannate and the second sub-dielectric film 24 comprises aluminum zinc oxide, gallium zinc oxide, indium zinc oxide, indium tin oxide, or vanadium zinc oxide. In one non-limiting embodiment, first dielectric layer 20 and/or second dielectric layer 32 comprises a silicon nitride film. In some embodiments, such as FIG. 5B, first dielectric layer 20 only has a first sub-film 22 and a second sub-film 24.

The first dielectric layer 20 can have a total thickness of less than or equal to about 1,000 Å, such as less than or equal to about 800 Å, such as between about 200 Å to about 800 Å, about 300 Å to about 600 Å, such as about 400 Å to about 550 Å, such as about 410 Å to about 500 Å, or such as about 420 Å to about 470 Å, such as about 422 Å and about 463 Å. Here, as well as elsewhere in the specification and claims, individual numerical values can be combined to form additional, or even new/non-disclosed, numerical ranges.

As shown in FIG. 5A, a first seed film 26 may be positioned over or in direct contact with at least a portion of second sub-film 24 of first dielectric layer 20. First seed film 26 may be adjacent to or in direct contact with first metallic layer 28 and between first dielectric layer 20 and first metallic layer 28. First seed film 26 is a film comprised of at least one of the following aluminum, aluminum silver, aluminum zinc, zinc, zinc tin, germanium, nickel, magnesium, silicon carbide, aluminum nitride, indium zinc, vanadium zinc, gallium zinc, indium tin, niobium, zirconium, tantalum, molybdenum, aluminum-doped silver, silver, silver zinc, titanium aluminum, mixtures thereof, alloys thereof, oxides thereof, sub-oxides thereof, nitrides thereof, and sub-nitrides thereof. In one embodiment, first seed film 26 comprises aluminum zinc, vanadium zinc, zinc, silver zinc, metals thereof, alloys thereof, oxides thereof, or sub-oxides thereof. In another embodiment, first seed film 26 comprises gallium zinc, indium zinc, indium tin, metals thereof, alloys thereof, oxides thereof, nitrides thereof, sub-nitrides thereof, or sub-oxides thereof. In another embodiment, a seed layer, such as seed layer 26, can be used in conjunction with any of the various dielectric layers disclosed herein, whether or not such orientation is specifically disclosed.

Compositions of non-limiting examples of the seed layer, as well as additional embodiments for second dielectric layer 32, third dielectric layer 46, as well as fourth and fifth dielectric layers can be found in United States Patent Application Publication No. 2023/0221466, the complete disclosure of which is hereby incorporated by reference in its entirety.

In certain embodiments, a portion of the seed layer is formed in an O₂ atmosphere that has a specific flow rate as to form an atmosphere of 1% to 70% O₂, with the remainder argon. The flow rate is an approximation to the amount of O₂ in the atmosphere, but that one of ordinary skill in the art would recognize that additional O₂ may leak into the coating chamber as the coating chamber is not hermetically sealed from the outside environment. In one embodiment, the seed layer comprises vanadium zinc (VₓZn₁₋ₓ) oxide. In another embodiment, the seed layer comprises silver oxide. In another embodiment, the seed layer comprises aluminum silver (AlₓAg₁₋ₓ). The seed layer can have a total thickness in the range of 5 Å to 100 Å, preferably 7.5 Å to 80 Å, more preferably 9 Å to 60 Å.

A first metallic layer 28 can be deposited over the first dielectric layer 20. The first metallic layer 28 can include a reflective metal, such as but not limited to metallic gold, copper, silver, aluminum, or mixtures, alloys, or combinations thereof. In one embodiment, the first metallic layer 28 comprises a metallic silver layer. First metallic layer 28 can have a thickness in the range of about 5 Å to about 550 Å, in the range of about 7.5 Å to about 450 Å, in the range of about 10 Å to about 500 Å, in the range of about 12.5 Å to about 450 Å, in the range of about 15 Å to about 450 Å, in the range of about 17.5 Å to about 400 Å, in the range of about 20 Å to about 350 Å, in the range of about 22.5 Å to about 300 Å, in the range of about 25 Å to about 250 Å, in the range of about 27.5 Å to about 200 Å, in the range of about 30 Å to about 150 Å, in the range of about 32.5 Å to about 100 Å, in the range of about 35 Å to about 75 Å, in the range of about 37.5 Å to about 60 Å, or even in the range of about 40 Å to about 55 Å. In another embodiment, the thickness of first metallic layer 28 can be in the range of about 5 Å to about 60 Å, in the range of about 7.5 Å to about 57.5 Å, in the range of about 10 Å to about 55 Å, in the range of about 12.5 Å to about 52.5 Å, in the range of about 15 Å to about 50 Å, in the range of about 17.5 Å to about 47.5 Å, in the range of about 20 Å to about 45 Å, in the range of about 22.5 Å to about 42.5 Å, in the range of about 25 Å to about 40 Å, in the range of about 27.5 Å to about 37.5 Å, or even in the range of about 30 Å to about 35 Å. Here, as well as elsewhere in the specification and claims, individual numerical values can be combined to form additional, or even new/non-disclosed, numerical ranges.

First primer layer 30 is deposited over first metallic layer 28. First primer layer 30 can be an oxygen-capturing material, such as titanium, that can be sacrificial during the deposition process to prevent degradation or oxidation of first metallic layer 28 during the sputtering process or subsequent heating processes. The oxygen-capturing material can be chosen to oxidize before the material of the first metallic layer 28. Non-limiting examples of suitable materials for the primer layer include titanium, cobalt, copper, silicon, zinc, aluminum, vanadium, tungsten, tantalum, niobium, zirconium, manganese, chromium, tin, nickel, germanium, magnesium, molybdenum, silver, silicon carbide, aluminum-doped silver, aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, combinations thereof, and alloys thereof. The primer layer material may also take the form of a metal, oxide, sub-oxide, nitride, and/or sub-nitride of any of the materials that may be used as the primer layer, as listed above. At least a portion of the primer layer may be an oxide or a nitride. In certain embodiments, a portion of the primer layer is a nitride.

For certain material compositions, the lower limit of one of the materials may be "greater than 0". When the lower limit is "greater than 0" this means that the weight percent (wt. %) of that material is not equal to zero, but may be any weight percent greater than 0 up to the weight percent of the upper limit. For some material compositions, the composition may change before and after the layer is heated. This is due to the material reacting with species in the atmosphere, which changes the wt. % distributed between the present species. Therefore, certain material compositions may have a before heating ("BH") and an after heating ("AH") weight percentage measurement to account for this change. Compositions of non-limiting examples of primer layers can be found in Table 1. Some materials may only have before heating or may only have after heating measurements due to that measurement being of more importance.

**Table 1 - Compositions of Metals for Metal Alloys Used as Primer Layers**

| **Material** | **Range (wt. %)** | **Preferred Range (wt. %)** | **More Preferred Range (wt. %)** | **Most Preferred Range (wt. %)** |
|---|---|---|---|---|
| AlₓZn₁₋ₓ | x = > 0 to 30 | x = > 0 to 20 | x = > 0 to 15 | x = 1 to 12 |
| GaₓZn₁₋ₓ | x = > 0 to 20 | x = > 0 to 15 | x = > 0 to 10 | x = 1 to 5 |
| InₓZn₁₋ₓ | x = > 0 to 40 | x = > 0 to 18 | x = > 0 to 15 | x = 1 to 10 |
| VₓZn₁₋ₓ | x = > 0 to 20 | x = > 0 to 15 | x = > 0 to 10 | x = 1 to 5 |
| AgₓZn₁₋ₓ | x = > 0 to 50 | x = > 0 to 40 | x = > 0 to 30 | x = 5 to 30 |
| AlₓTi₁₋ₓ (BH) | x = 2 to 75 | x = 2 to 60 | x = 2 to 50 | x = 2 to 40 |
| AlₓTi₁₋ₓ (AH) | x = 1 to 100 | x = 1 to 98 | x = 2 to 95 | x = 2 to 15 |
| | | | | x = 20 to 95 |
| Al_{X}Nb_{1-X} (BH) | x = 2 to 40 | x = 2 to 30 | x = 2 to 19 | x = 2 to 13 |
| AlₓNb₁₋ₓ (AH) | x = 2 to 95 | x = 2 to 80 | x = 3 to 60 | x = 4 to 45 |
| AlₓNb₁₋ₓ nitride (BH) | x = 1 to 100 | x = 1 to 98 | x = 1 to 95 | x = 2 to 93 |
| AlₓNb₁₋ₓ nitride (AH) | x = 1 to 100 | x = 2 to 75 | x = 3 to 50 | x= 4 to 40 |
| WₓTi₁₋ₓ Sub-oxide (7% O₂ deposition) (BH) | x = 55 to 100 | x = 65 to 100 | x = 75 to 100 | x = 80 to 100 |
| WₓTi₁₋ₓ sub-oxide (3% O₂ deposition) (AH) | x = 30 to 95 | x = 40 to 95 | x = 50 to 95 | x = 55 to 95 |
| TiₓTa₁₋ₓ (BH) | x = 2 to 80 | x = 2 to 60 | x = 2 to 35 | x = 2 to 20 |
| TiₓTa₁₋ₓ (AH) | x = 2 to 40 | x = 2 to 30 | x = 2 to 25 | x = 2 to 20 |
| TiₓNb₁₋ₓ (AH) | x = 2 to 95 | x = 2 to 93 | x = 3 to 92 | x = 5 to 90 |
| TiₓNb₁₋ₓ nitride | x = 1 to 65 | x = 1 to 50 | x = 1 to 40 | x = 1 to 30 |
| NbₓZr₁₋ₓ (BH) | x = 1 to 80 | x = 1 to 70 | x = 1 to 60 | x = 1 to 50 |
| NbₓZr_{1-X} (AH) | x = 60 to 100 | x = 70 to 100 | x = 80 to 100 | x = 85 to 100 |
| TaₓW₁₋ₓ (BH) | x = 2 to 95 | x = 2 to 80 | x = 3 to 60 | x = 5 to 50 |
| WₓNb₁₋ₓ (BH) | x = 5 to 100 | x = 6 to 90 | x = 8 to 80 | x = 10 to 70 |
| WₓNb₁₋ₓ (AH) | x = 2 to 50 | x = 2 to 45 | x = 2 to 40 | x = 2 to 30 |
| WₓNb₁₋ₓ nitride (BH) | x = 2 to 90 | x = 5 to 80 | x = 7 to 75 | x = 10 to 70 |
| WₓNb₁₋ₓ nitride (AH) | x = 2 to 70 | x = 10 to 70 | x = 20 to 70 | x = 30 to 70 |
| ZnₓTi₁₋ₓ (BH) | x = 10 to 100 | x =10 to 80 | x = 10 to 70 | x = 10 to 60 |
| ZnₓTi₁₋ₓ (AH) | x = 20 to 100 | x = 40 to 97 | x = 50 to 94 | x = 60 to 90 |

If titanium is used as first primer layer 28, the titanium would preferentially oxidize to titanium dioxide before oxidation of the underlying silver layer. In one embodiment, first primer layer 28 has a thickness in the range of about 5 Å to about 50 Å, or from about 10 Å to about 45 Å, or from about 15 Å to about 40 Å, or from about 20 Å to about 35 Å, or from about 25 Å to about 30 Å, or even from about 20 Å to about 30 Å, or even from about 30 Å to about 40 Å. Here, as well as elsewhere in the specification and claims, individual numerical values can be combined to form additional, or even new/non-disclosed, numerical ranges.

Second dielectric layer 32 is deposited over first primer layer 30. As noted above, second dielectric layer can be a multi-layer dielectric structure as discussed with regard to first dielectric layer 20. The first sub-film of second dielectric layer 32, that is the first sub-film that is located over first primer layer 30, can comprise an oxide, a nitride, an oxynitride or a mixture therefore of a metal selected from the group consisting of titanium, hafnium, zirconium, niobium, zinc, bismuth, lead, indium, tin, silicon, aluminum, gallium, vanadium, and mixtures thereof. In one embodiment, the first sub-film of second dielectric layer 32 comprises zinc oxide. In another embodiment, the first sub-film of second dielectric layer 32 comprises aluminum zinc oxide. In another embodiment, the first sub-film of second dielectric layer 32 comprises indium zinc oxide. In another embodiment, the first sub-film of second dielectric layer 32 comprises gallium zinc oxide. In another embodiment, the first sub-film of second dielectric layer 32 comprises indium tin oxide. In another embodiment, the first sub-film of second dielectric layer 32 comprises vanadium zinc oxide.

A second sub-film of second dielectric layer 32, that is a second sub-film that is located over the first sub-film of second dielectric layer 32, can comprise an oxide, a nitride, an oxynitride or a mixture therefore of a metal selected from the group consisting of titanium, hafnium, zirconium, niobium, zinc, bismuth, lead, indium, tin, silicon, aluminum, gallium, vanadium, and mixtures thereof. In one embodiment, the second sub-film of second dielectric layer 32 comprises zinc stannate. In some embodiments the sub-first film and the second sub-film are the only sub-films of second dielectric layer 32.

An optional third sub-film of second dielectric layer 32, that is a third sub-film that is located over the second sub-film of second dielectric layer 32, can comprise to form a multi-film second dielectric layer 32. The third sub-film of second dielectric layer 32 comprises an oxide, a nitride, an oxynitride or a mixture therefore of a metal selected from the group consisting of titanium, hafnium, zirconium, niobium, zinc, bismuth, lead, indium, tin, silicon, aluminum, gallium, vanadium, and mixtures thereof. In one embodiment, the third film 38 comprises zinc oxide. In another embodiment, the third sub-film of second dielectric layer 32 comprises indium zinc oxide. In another embodiment, the third sub-film of second dielectric layer 32 comprises gallium zinc oxide. In another embodiment, third sub-film of second dielectric layer 32 comprises indium tin oxide. In another embodiment, the third sub-film of second dielectric layer 32 comprises vanadium zinc oxide. In one non-limiting embodiment, first dielectric layer 20 or second dielectric layer 32 comprises a silicon nitride film. In some embodiments, second dielectric layer 32 comprises a first sub-film, a second sub-film, and a third sub-film. In some embodiments, second dielectric layer 32 only has a first sub-film and a second sub-film.

Second dielectric layer 32 can have a thickness in the range of less than or equal to about 1,500 Å, such as less than or equal to about 1,200 A, or in the range of about 400 Å to about 1,200 Å, or in the range of about 500 Å to about 1,100 Å, or in the range of about 600 Å to about 1,000 Å, or in the range of about 700 Å to about 900 Å, or in the range of about 775 Å to about 850 Å. Here, as well as elsewhere in the specification and claims, individual numerical values can be combined to form additional, or even new/non-disclosed, numerical ranges.

In one embodiment, where an additional coating is placed over at least one non-viewing area of a substrate such as a windshield (e.g., above the AS-1 Line as described above), this additional coating is conductive coating 13 (or second conductive coating 13 as initially described above). As is illustrated in FIGS. 6A and 6B, an overall coating 200 is formed typically on at least one non-viewing area of a substrate and/or at least a portion, or even all, of a windshield above the AS-1 Line and comprises a combination of conductive coating 10 (or first conductive coating 10) and conductive coating 13 (or second conductive coating 13).

As noted above, conductive coating 10 (or first conductive coating 10) in this embodiment typically comprises one metallic layer and one primer layer positioned in between two dielectric layers. Thus, in one instance, conductive coating 10 (or first conductive coating 10) includes a base layer or first dielectric layer 20 positioned over, or in direct contact with, at least a portion, or all, of a major surface of a substrate (e.g., the No. 2 surface 16 of first ply 12, or the No. 3 surface 114 of second ply 110). A first metallic layer 28 is positioned over, or in direct contact with, at least a portion, or all, of first dielectric layer 20. A first primer layer 30 is positioned over, or in direct contact with, at least a portion, or all, of first metallic layer 28. A second dielectric layer 32 is positioned over, or in direct contact with, at least a portion, or all, of first primer layer 30. An optional protective layer 84 is positioned over, or in direct contact with, at least a portion, or all, of second dielectric layer 32.

As to conductive coating 13 (or second conductive coating 13), this coating comprises a second metallic layer 202 positioned over, or in direct contact with, at least a portion of second dielectric layer 32. Alternatively, if present, second metallic layer 202 is positioned over, or in direct contact with, at least a portion of only a portion of first conductive coating 84. In this instance, "at least a portion" means at least one non-viewing area of a substrate such as, in a non-limiting manner, above the AS-1 Line of a windshield as described above. A second primer layer 204 is positioned over, or in direct contact with, second metallic layer 202. A third dielectric layer 206 is positioned over, or in direct contact with, second primer layer 204. An optional second protective layer 208 is positioned over, or in direct contact with, at least a portion, or all, of third dielectric layer 206.

Additionally, with regard to the embodiment of FIG. 6B, when protective layer 84 is present, an optional stress layer 82 can be positioned between second dielectric layer 32 and protective layer 84.

Additionally, in some embodiments, coating 200 can further comprise, via conductive coating 13 (or second conductive coating 13): a third metallic layer over the third dielectric layer or, if present, over the second protective layer; a third primer layer over the third metallic layer; a fourth dielectric layer over the third primer layer; a fourth metallic layer over the fourth dielectric layer; a fourth primer layer over the fourth metallic layer; a fifth dielectric layer over the fourth primer layer; and optionally a third protective layer positioned over the fifth dielectric layer.

Furthermore, in still another embodiment, coating 200 can further comprise, via conductive coating 13 (or second conductive coating 13): a fifth metallic layer over the fifth dielectric layer or, if present, over the third protective layer; a fifth primer layer over the fifth metallic layer; a sixth dielectric layer over the fifth primer layer; a sixth metallic layer over the sixth dielectric layer; a sixth primer layer over the sixth metallic layer; a seventh dielectric layer over the sixth primer layer; and optionally a fourth protective layer positioned over the seventh dielectric layer.

With regard to the make-up and thicknesses of the various metallic layers, primer layers, third dielectric layers, and protective layers of the various embodiments of second coating 13 (or second conductive coating 13), these layers can be formed from, and have the thicknesses, of layers 20, 28, 30, and 32 as described in detail above.

Examples of materials suitable for any one or more of the primer layers described herein include titanium, silicon, cobalt, zinc, aluminum, vanadium, tungsten, tantalum, niobium, zirconium, manganese, chromium, tin, nickel, gallium, indium, germanium, magnesium, molybdenum, silver, silicon carbide, aluminum-doped silver aluminum zinc, vanadium zinc, tungsten tantalum, titanium niobium, zirconium niobium, tungsten niobium, aluminum niobium, aluminum titanium, tungsten titanium, tantalum titanium, zinc titanium, aluminum silver, zinc tin, indium zinc, silver zinc, mixtures thereof, and alloys thereof, where the primer is deposited as a metal and may be subsequently oxidized. At least a portion of any one or more of the primer layers described herein can, in one embodiment, be a nitride or an oxide. If silver zinc, zinc, silver zinc oxide, aluminum zinc oxide, indium zinc oxide, gallium zinc oxide, or vanadium zinc oxide is used as any of the primer layers described herein, it is preferentially oxidize before oxidation of the underlying metallic layer and/or silver layer.

In one embodiment, any one or more of the primer layers described herein comprise zinc. In another embodiment any one or more of the primer layers described herein comprise AgₓZn₁₋ₓ oxide. In another embodiment, any one or more of the primer layers described herein comprise AgₓZn₁₋ₓ. In another embodiment, any one or more of the primer layers described herein comprise AlₓZn₁₋ₓ oxide. In another embodiment any one or more of the primer layers described herein comprise InₓZn₁₋ₓ oxide. In another embodiment, any one or more of the primer layers described herein comprise GaₓZn₁₋ₓ oxide. In another embodiment, any one or more of the primer layers described herein comprise VₓZn₁₋ₓ oxide. In another embodiment any one or more of the primer layers described herein comprise AlₓTi₁₋ₓ oxide. In another embodiment, any one or more of the primer layers described herein comprise AlₓNb₁₋ₓ oxide. In another embodiment, any one or more of the primer layers described herein comprise AlₓNb₁₋ₓ nitride. In another embodiment, any one or more of the primer layers described herein comprise WₓNb₁₋ₓ nitride. In another embodiment, any one or more of the primer layers described herein comprise WₓTi₁₋ₓ oxide. In another embodiment, any one or more of the primer layers described herein comprise TiₓTa₁₋ₓ oxide. In another embodiment, any one or more of the primer layers described herein comprise TiₓNb₁₋ₓ oxide. In another embodiment, any one or more of the primer layers described herein comprise TiₓNb₁₋ₓ nitride. In another embodiment, any one or more of the primer layers described herein comprise NbₓZr₁₋ₓ oxide. In another embodiment, any one or more of the primer layers described herein comprise TaₓW₁₋ₓ oxide. In another embodiment, any one or more of the primer layers described herein comprise WₓNb₁₋ₓ oxide. In another embodiment, any one or more of the primer layers described herein comprise ZnₓTi₁₋ₓ oxide. In another embodiment, any one or more of the primer layers described herein comprise titanium. Any one or more of the primer layers described herein can have a thickness in the range of about 5 Å to about 50 Å, or from about 10 Å to about 45 Å, or from about 15 Å to about 40 Å, or from about 20 Å to about 35 Å, or from about 25 Å to about 30 Å, or even from about 20 Å to about 30 Å, or even from about 30 Å to about 40 Å. Here, as well as elsewhere in the specification and claims, individual numerical values can be combined to form additional, or even new/non-disclosed, numerical ranges.

In one non-limiting embodiment, any of the dielectric layers disclosed herein can include two, or even three, sub-films as described above with regard to first dielectric layer 20 and FIGS. 5A and 5B, and formed from the materials described with regard to the embodiments of FIGS. 5A and 5B.

In one non-limiting embodiment, the coated article comprises only a first coating formed over the substrate, the first coating comprising a first dielectric layer over the substrate; a first metallic layer over the first dielectric layer; a first primer layer over the first metallic layer; a second dielectric layer over the first primer layer; and optionally a first protective layer over the second dielectric layer; and a second coating formed over a first portion of the first coating, the first portion comprising at least an area above an AS-1 Line, wherein the second coating comprises a second metallic layer over a portion of the second dielectric layer or, if present, a portion of the first protective layer; a second primer layer over the second metallic layer; a third dielectric layer over the second primer layer; and optionally a second protective layer over the third dielectric layer.

In any of the embodiments described herein, any of the various protective layers is/are deposited over an underlying dielectric layer, to assist in protecting any one or more underlying layers, such as the metallic layers, from mechanical and chemical attack during processing. In one non-limiting embodiment, the various protective layers of the present invention can be an oxygen barrier coating layer to prevent or reduce the passage of ambient oxygen into the underlying layers of coating 10 and/or 13, such as during heating or bending. The one or more various protective layers of the present invention can be of any desired material or mixture of materials. In one exemplary embodiment, the one or more various protective layers of the present invention can include a layer having one or more metal oxide or nitride materials, such as but not limited to oxides and/or nitrides of aluminum, silicon, or mixtures thereof. For example, the one or more various protective layers of the present invention can be a single coating layer comprising in the range of 0 wt.% to 100 wt.% alumina and/or 100 wt. % to 0 wt. % silica, such as 5 wt. % to 95 wt. % alumina 45 and 95 wt. % to 5 wt. % silica, such as 10 wt. % to 90 wt. % alumina and 90 wt. % to 10 wt. % silica, such as 15 wt. % to 90 wt.% alumina and 85 wt.% to 10 wt.% silica, such as 50 wt. % to 75 wt. % alumina and 50 wt. % to 25 wt. % silica, such as 50 wt. % to 70 wt. % alumina and 50 wt. % to 30 wt. % silica, such as 35 wt. % to 100 wt. % alumina and 65 wt. % to 0 wt. % silica, e.g., 70 wt. % to 90 wt. % alumina and 30 wt. % to 10 wt. % silica, e.g., 75 wt. % to 85 wt. % alumina and 25 wt. % to 15 wt. % of silica, e.g., 88 wt. % alumina and 12 wt. % silica, e.g., 65 wt. % to 75 wt. % alumina and 35 wt. % to 25 wt. % silica, e.g., 70 wt. % alumina and 30 wt. % silica, e.g., 60 wt. % to less than 75 wt. % alumina and greater than 25 wt. % to 40 wt. % silica. Other materials, such as aluminum, chromium, hafnium, yttrium, nickel, boron, phosphorous, titanium, zirconium, and/or oxides thereof, can also be present, such as to adjust the refractive index of the one or more various protective layers of the present invention. In one non-limiting embodiment, the refractive index of the one or more various protective layers of the present invention can be in the range of 1 to 3, such as 1 to 2, such as 1.4 to 2, such as 1.4 to 1.8. Here, as well as elsewhere in the specification and claims, individual numerical values can be combined to form additional, or even new/non-disclosed, numerical ranges.

In one non-limiting embodiment, the one or more various protective layers of the present invention is/are a combination silica and alumina coating. The one or more various protective layers of the present invention can be sputtered from two cathodes (e.g., one silicon and one aluminum) or from a single cathode containing both silicon and aluminum. This silicon/aluminum oxide protective layer of the present invention can be written as SiₓAl₁₋ₓO_{(1.5+x)/2}, where x can vary from greater than 0 to less than 1. In another non-limiting embodiment, the one or more various protective layers of the present invention comprise a combination of titania and alumina.

In one non-limiting embodiment, the one or more various protective layers of the present invention may be comprised of silicon nitride (Si₃N₄), silicon oxynitride (SiON), silicon aluminum nitride (SiAlN), silicon aluminum oxynitride (SiAlON), a mixture thereof, and/or an alloy thereof, and which may provide increased durability to any one or more of the metallic layers 28, 202, etc. of the present invention. The one or more various protective layers of the present invention may be formed of silicon nitride deposited with other materials having superior electrical conductivity to improve sputtering of the silicon. For example, during deposition, the silicon cathode can include a small amount (e.g., up to 20 wt.%, up to 15 wt.%, up to 10 wt.%, or up to 5 wt.%) of aluminum to improve sputtering. In which case, the resultant silicon nitride protective layer would include a small percentage of aluminum, e.g., up to 15 wt. % aluminum, e.g., up to 10 wt.% aluminum, e.g., up to 5 wt.% aluminum. A coating layer deposited from a silicon cathode having up to 10 wt.% aluminum (added to enhance the conductivity of the cathode) is referred to herein as "a silicon nitride" layer, even though a small amount of aluminum may be present. The small amount of aluminum in the cathode (e.g., less than or equal to 15 wt.%, such as less than or equal to 10 wt.%, such as less than or equal to 5 wt.%) is believed to form aluminum nitride in the predominantly silicon nitride protective layer of the present invention. The one or more various protective layers of the present invention may be formed in a nitrogen atmosphere; however, it is to be understood that other gasses, such as oxygen, may be present in the atmosphere during the deposition of the one or more various protective layers of the present invention. Here, as well as elsewhere in the specification and claims, individual numerical values can be combined to form additional, or even new/non-disclosed, numerical ranges.

The one or more various protective layers of the present invention can be of any desired thickness. The one or more various protective layers of the present invention can have a thickness in the range of about 10 Å to about 800 Å, such as about 100 Å to about 800 Å, such as about 100 Å to about 600 Å, such as about 350 Å to about 500 Å. In one non-limiting embodiment, the one or more various protective layers of the present invention is/are a silicon/aluminum oxide coating (SiₓAl₁₋ₓO_{(1.5+x)/2}) having a thickness in the range of about 50 Å to about 50,000 Å, such as about 50 Å to about 10,000 Å, such as about 100 Å to about 1,000 Å, e.g., about 100 Å to about 500 Å, such as about 100 Å to about 400 Å, such as about 350 Å to about 400 Å, such as about 380 Å. Here, as well as elsewhere in the specification and claims, individual numerical values can be combined to form additional, or even new/non-disclosed, numerical ranges.

In one embodiment, at least one of the various protective layers of the present invention is the outermost layer of the coated article. Further, one or more various protective layers of the present invention can be of non-uniform thickness. By "non-uniform thickness" is meant that the thickness of the one or more various protective layers of the present invention can vary over a given unit area, e.g., the one or more various protective layers of the present invention can have high and low spots or areas.

In another non-limiting embodiment, the one or more various protective layers of the present invention can be a multilayer coating comprising a first film and a second film formed over the first film. The first film can comprise alumina, silica, titania, zirconia, tin oxide, or mixtures thereof. In one specific non-limiting embodiment, the first film can comprise alumina or a mixture or alloy comprising alumina and silica. For example, the first film can comprise a silica/alumina mixture having greater than 5 wt. % alumina, such as greater than 10 wt. % alumina, such 30 as greater than 15 wt. % alumina, such as greater than 30 wt. % alumina, such as greater than 40 wt. % alumina, such as 50 wt.% to 70 wt.% alumina, such as in the range of 60 wt. % to 100 wt. % alumina and 40 wt. % to 0 wt. % silica, e.g. 60 wt.% alumina and 40 wt.% silica. In another example, the first layer can comprise zinc stannate. In another example, the first film can comprise zirconia. In one non-limiting embodiment, the first film can have a thickness in the range of greater than 0 Å to 1 micron, such as 100 Å to 250 Å, such as 101 A to 250 Å, such as 150 Å to 200 Å, such as 160 Å. Here, as well as elsewhere in the specification and claims, individual numerical values can be combined to form additional, or even new/non-disclosed, numerical ranges.

The second film of the one or more various protective layers of the present invention may comprise, for example, a metal oxide or metal nitride. The second film can be titania, alumina, silica, zirconia, tin oxide, a mixture thereof, or an alloy thereof. For example, the second film may include a mixture of titania and alumina; a mixture of titania and silica; or zirconia. An example of the second film can comprise a titania/alumina mixture having 40-60 wt. % alumina, and 60-40 wt. % titania; 45-55 wt. % alumina, and 55-45 wt.% titania; 48-52 wt.% alumina, and 52-48 wt.% titania; 49-51 wt.% alumina, and 51-49 wt.% titania; or 50 wt.% alumina, and 50 wt.% titania. An example of the second film may include titanium aluminum oxide (TiAlO). Another example of the second film is a silica/alumina mixture having greater than 40 wt. % silica, such as greater than 50 wt. % silica, such as greater than 60 wt. % silica, such as greater than 70 wt. % silica, such as greater than 80 wt. % silica, such as in the range of 80 wt. % to 90 wt. % 45 silica and 10 wt. % to 20 wt. % alumina, e.g., 85 wt. % silica and 15 wt. % alumina. Here, as well as elsewhere in the specification and claims, individual numerical values can be combined to form additional, or even new/non-disclosed, numerical ranges.

In one non-limiting embodiment, the second film can have a thickness in the range of greater than 0 Å to 2 microns, such as 50 Å to 5,000 Å, such as 50 Å to 2,000 Å, such as 100 Å to 1,000 Å, such as 200 Å to 500 Å, such as 220 Å to 350 Å, such as 220 Å. Here, as well as elsewhere in the specification and claims, individual numerical values can be combined to form additional, or even new/non-disclosed, numerical ranges.

Non-limiting examples of suitable protective layers are described, for example, in U.S. patent application Ser. Nos. 10/007,382; 10/133,805; 10/397,001; 10/422,094; 10/422,095; and 10/422,096.

In non-limiting examples, the one or more various protective layers of the present invention may include an additional third film formed over the second film. This third film can be any of the materials used to form the first film or the second film. The third film, for example, can comprise alumina, silica, titania, zirconia, tin oxide, or mixtures thereof. For example, the third film can comprise a mixture of silica and alumina. In another example, the third film comprises zirconia.

In between the top dielectric layer of coating 10 and protective layer 84, and over at least a portion of or in direct contact with the top dielectric layer of coating 10, may be a stress layer 82. Stress layer 82 is added underneath protective layer 84 to reduce the sheet resistance of coating 10. Stress layer 82 may have a thickness between 5 Å to 300 Å, preferably 10 Å to 250 Å, more preferably 10 Å to 200 Å, or most preferably 10 Å to 180 Å. In certain embodiments, stress layer 82 can comprise silicon, cobalt, titanium, niobium, zirconium, tantalum, oxygen, and/or titanium. In one embodiment, stress layer 82 comprises silicon cobalt. In one embodiment, stress layer 82 comprises TiₓNb₁₋ₓ suboxide or oxide, wherein x is within the range of 1-100 wt. % (BH and AH). In another embodiment, stress layer 82 comprises NbₓZr₁₋ₓ suboxide or oxide, wherein x is within the range of 1-12 wt. % AH, preferably 1-11 wt. % AH, more preferably 1-11 wt. % AH, and most preferably 1-10 wt. % AH. In another embodiment, stress layer 82 comprises TiₓTa₁₋ₓ suboxide or oxide, wherein x is within the range of 1-100 wt. % AH, preferably 1-20 wt. % AH or 30-100 wt. % AH, more preferably 1-10 wt. % AH or 500 wt. % AH, and most preferably 1-4 wt. % AH or 60-100 wt. % AH. In another embodiment, stress layer 82 comprises SiₓCo₁₋ₓ suboxide or oxide, wherein x is within the range of 10-90 wt. % AH, preferably 15-90 wt. % AH, more preferably 18-90 wt. % AH, and most preferably 20-90 wt. % AH. Here, as well as elsewhere in the specification and claims, individual numerical values can be combined to form additional, or even new/non-disclosed, numerical ranges.

In one non-limiting practice of the invention, coating 10 and/or coating 13 (or in some embodiments even the combined coating 200) provides a visible light reflectance of not more than 25%. For example, not more than 20%, such as not more than 10%, such as not more than 8%. In one non-limiting practice of the invention, coating 10 and/or coating 13 (or in some embodiments even the combined coating 200) provides an exterior reflected a* at an 8 degree angle (Rg8a*) in the range of 0 to -10. For example, in the range of -1 to -8, preferably -1.2 to -7.0, more preferably -1.5 to -6.8, most preferably -1.7 to -6.5. In one non-limiting practice of the invention, coating 10 and/or coating 13 (or in some embodiments even the combined coating 200) provides an exterior reflected b* at an 8 degree angle (Rg8b*) in the range of 2 to -8. For example, in the range of 2.5 to -8.0, preferably 2.0 to -7.5, more preferably 1.8 to -7.3, most preferably 1.5 to -7.0.

An embodiment of the invention is a vehicle transparency that has only two metal layers are sandwiched between dielectric layers. Each metal layer has a thickness. The combined thickness of both metal layers is between about 300 Å to about 5000 Å; preferably between about 400 Å to about 4000 Å; more preferably between about 500 Å to about 3000 Å; most preferably between about 550 Å to about 2500 Å. This vehicle transparency can have the coating structure shown in Table 2.

**Table 2**

| **Laver** | **Exemplarv Material** | **Thickness (Å unless otherwise indicated)** |
|---|---|---|
| Substrate | Glass | 1 mm to 10 mm; |
| | | preferably 1 mm to 5 mm; |
| | | more preferably 1.5 mm to 2.5 mm; |
| | | most preferably 1.8 mm to 2.3 mm |
| 1^{st} Dielectric Layer | 1^{st} film: ZnO, AlZnO, GaZnO, InZnO, InSnO, and/or VZnO; | 300 to 600; |
| | | preferably 400 to 550; |
| | 2^{nd} film: Zn₂SnO₄ | more preferably 450 to 500; |
| | | most preferably 465 to 480 |
| Optional 1^{st} Seed Film | VZnO, AlZnO, GaZnO, InZnO, SnInO, Ag, and/or Al doped Ag | 5 to 100; |
| | | preferably 7.5 to 80; |
| | | more preferably 9 to 60 |
| 1^{st} Metallic Layer | Ag, Cu, and/or Al doped Ag | 50 to 600; |
| | | preferably 75 to 500; |
| | | more preferably 100 to 400; |
| | | most preferably 125 to 300 |
| 1^{st} Primer Layer | Ti, TiAl, Zn, AgZn, AgZnO, AlZnO, InZnO, GaZnO, AlTiO, AlNbO, AlNbN, WTiO, TiTaO, TiNbO, TiNbN, NbZrO, TaWO, WNbO, WNbN, ZnTiO, and/or VZnO | 5 to 50; |
| | | preferably 10 to 25; |
| | | more preferably 15 to 25 |
| 2^{nd} Dielectric Layer | 1^{st} film: ZnO, AlZnO, GaZnO, InZnO, InSnO, and /or VZnO; | 400 to 1100; |
| | 2^{nd} film: Zn₂SnO₄; | preferably 500 to 1000; |
| | 3^{rd} film: ZnO, AlZnO, GaZnO, InZnO, InSnO, and /or VZnO | more preferably 600 to 900; |
| | | most preferably 720 to 800 |
| Optional 2^{nd} Seed Film | VZnO, AlZnO, GaZnO, InZnO, SnInO, Ag, and/or Al doped Ag | 5 to 100; |
| | | preferably 7.5 to 80; |
| | | more preferably 9 to 60 |
| Optional 1^{st} Protective Layer | Si₃N₄, SiON, SiAlN, SiAlO, TiAlO, and/or SiAlON | 10 to 800; |
| | | preferably 100 to 800; |
| | | more preferably 100 to 600; |
| | | most preferably 350 to 550 |
| 2^{nd} Metallic Layer | Ag, Cu, and/or Al doped Ag | 50 to 1000 |
| | | preferably 50 to 200; |
| | | more preferably 75 to 175; |
| | | even more preferably 100 to 150; |
| | | most preferably 125 to 145 |
| 2^{nd} Primer Layer | Ti, TiAl, Zn, AgZn, AgZnO, AlZnO, InZnO, GaZnO, AlTiO, AlNbO, AlNbN, WTiO, TiTaO, TiNbO, TiNbN, NbZrO, TaWO, WNbO, WNbN, ZnTiO, and/or VZnO | 5 to 50; |
| | | preferably 10 to 25; |
| | | more preferably 15 to 25 |
| 3^{rd} Dielectric Layer | 1^{st} film: ZnO, AlZnO, GaZnO, InZnO, InSnO, and /or VZnO; | 400 to 1100; |
| | 2^{nd} film: Zn₂SnO₄; | preferably 500 to 1000; |
| | 3^{rd} film: ZnO, AlZnO, GaZnO, InZnO, InSnO, and /or VZnO | more preferably 600 to 900; |
| | | most preferably 700 to 825 |
| Optional 2^{nd} Protective Layer | Si₃N₄, SiON, SiAlN, SiAlO, TiAlO, and/or SiAlON | 10 to 800; |
| | | preferably 100 to 800; |
| | | more preferably 100 to 600; |
| | | most preferably 350 to 550 |

Given the range in Table 2 above, additional ranges for the first metallic layer and the second metallic layer are as follows. In additional embodiments, the first metallic layer has a thickness in the range of about 55 Å to about 550 Å, preferably in the range of about 60 Å to about 450 Å, preferably in the range of about 65 Å to about 500 Å, preferably in the range of about 70 Å to about 450 Å, preferably in the range of about 75 Å to about 450 Å, preferably in the range of about 80 Å to about 400 Å, preferably in the range of about 90 Å to about 350 Å, or even more preferably 100 Å to about 300 Å. In additional embodiments, the second metallic layer has a thickness in the range of about 50 Å to about 600 Å, preferably in the range of about 55 Å to about 550 Å, preferably in the range of about 60 Å to about 500 Å, preferably in the range of about 65 Å to about 450 Å, preferably in the range of about 70 Å to about 400 Å, preferably in the range of about 75 Å to about 350 Å, preferably in the range of about 80 Å to about 300 Å, preferably in the range of about 85 Å to about 250 Å, preferably in the range of about 90 Å to about 200 Å, preferably in the range of about 95 Å to about 150 Å, preferably in the range of about 100 Å to about 140 Å, preferably in the range of about 110 Å to about 130 Å, or even more preferably in the range of about 115 Å to about 125 Å. Here, as well as elsewhere in the specification and claims, individual numerical values can be combined to form additional, or even new/non-disclosed, numerical ranges.

Another embodiment of the invention is a vehicle transparency that has four metallic layers sandwiched between dielectric layers. Each metal layer has a thickness. The combined thickness of all four metal layers is between about 300 Å to about 5000 Å; preferably between about 400 Å to about 4000 Å; more preferably between about 500 Å to about 3000 Å; most preferably between about 550 Å to about 2500 Å. This vehicle transparency can have the coating structure shown in Table 3.

**Table 3**

| **Laver** | **Exemplarv Material** | **Thickness (Å unless otherwise indicated)** |
|---|---|---|
| Substrate | Glass | 1 mm to 10 mm; |
| | | preferably 1 mm to 5 mm; |
| | | more preferably 1.5 mm to 2.5 mm; |
| | | most preferably 1.8 mm to 2.3 mm |
| 1^{st} Dielectric Layer | 1^{st} film: ZnO, AlZnO, GaZnO, InZnO, InSnO, and/or VZnO; | 300 to 600; |
| | | preferably 400 to 550; |
| | | more preferably 450 to 500; |
| | 2^{nd} film: Zn₂SnO₄ | most preferably 465 to 480 |
| Optional 1^{st} Seed Film | VZnO, AlZnO, GaZnO, InZnO, SnInO, Ag, and/or Al doped Ag | 5 to 100; |
| | | preferably 7.5 to 80; |
| | | more preferably 9 to 60 |
| 1^{st} Metallic Layer | Ag, Cu, and/or Al doped Ag | 50 to 600; |
| | | preferably 75 to 500; |
| | | more preferably 100 to 400; |
| | | most preferably 125 to 300 |
| 1^{st} Primer Layer | Ti, TiAl, Zn, AgZn, AgZnO, AlZnO, InZnO, GaZnO, AlTiO, AlNbO, AlNbN, WTiO, TiTaO, TiNbO, TiNbN, NbZrO, TaWO, WNbO, WNbN, ZnTiO, and/or VZnO | 5 to 50; |
| | | preferably 10 to 25; |
| | | more preferably 15 to 25 |
| 2^{nd} Dielectric Layer | 1^{st} film: ZnO, AlZnO, GaZnO, InZnO, InSnO, and /or VZnO; 2^{nd} film: Zn₂SnO₄; | 400 to 1100; |
| | | preferably 500 to 1000; |
| | 3^{rd} film: ZnO, AlZnO, GaZnO, InZnO, InSnO, and /or VZnO | more preferably 600 to 900; |
| | | most preferably 720 to 800 |
| Optional 2^{nd} Seed Film | VZnO, AlZnO, GaZnO, InZnO, SnInO, Ag, and/or Al doped Ag | 5 to 100; |
| | | preferably 7.5 to 80; |
| | | more preferably 9 to 60 |
| Optional 1^{st} Protective Layer | Si₃N₄, SiON, SiAlN, SiAlO, TiAlO, and/or SiAlON | 10 to 800; |
| | | preferably 100 to 800; |
| | | more preferably 100 to 600; |
| | | most preferably 350 to 550 |
| 2^{nd} Metallic Layer | Ag, Cu, and/or Al doped Ag | 50 to 1000, preferably 50 to 200; |
| | | more preferably 75 to 175; |
| | | even more preferably 100 to 150; |
| | | most preferably 125 to 145 |
| 2^{nd} Primer Layer | Ti, TiAl, Zn, AgZn, AgZnO, AlZnO, InZnO, GaZnO, AlTiO, AlNbO, AlNbN, WTiO, TiTaO, TiNbO, TiNbN, NbZrO, TaWO, WNbO, WNbN, ZnTiO, and/or VZnO | 5 to 50; |
| | | preferably 10 to 25; |
| | | more preferably 15 to 25 |
| 3^{rd} Dielectric Layer | 1^{st} film: ZnO, AlZnO, GaZnO, and /or InZnO, InSnO, VZnO; | 400 to 1100; |
| | 2^{nd} film: Zn₂SnO₄; | preferably 500 to 1000; |
| | | more preferably 600 to 900; |
| | 3^{rd} film: ZnO, AlZnO, GaZnO,InZnO, InSnO, and /or VZnO | most preferably 700 to 825 |
| Optional 3^{rd} Seed Film | VZnO, AlZnO, GaZnO, InZnO, SnInO, Ag, and/or Al doped Ag | 5 to 100; |
| | | preferably 7.5 to 80; |
| | | more preferably 9 to 60 |
| Optional 2^{nd} Protective Layer | Si₃N₄, SiON, SiAlN, SiAlO, TiAlO, and/or SiAlON | 10 to 800; |
| | | preferably 100 to 800; |
| | | more preferably 100 to 600; |
| | | most preferably 350 to 550 |
| 3^{rd} Metallic Layer | Ag, Cu, and/or Al doped Ag | 50 to 1000; |
| | | preferably 75 to 750; |
| | | more preferably 100 to 500; |
| | | most preferably 125 to 400 |
| 3^{rd} Primer Layer | Ti, TiAl, Zn, AgZn, AgZnO, AlZnO, InZnO, GaZnO, AlTiO, AlNbO, AlNbN, WTiO, TiTaO, TiNbO, TiNbN, NbZrO, TaWO, WNbO, WNbN, ZnTiO, and/or VZnO | 5 to 50; |
| | | preferably 10 to 25; |
| | | more preferably 15 to 25 |
| 4^{th} Dielectric Layer | 1^{st} film: ZnO, AlZnO, GaZnO, InZnO, InSnO, and /or VZnO; | 400 to 1100; |
| | 2^{nd} film: Zn₂SnO₄; | preferably 500 to 1000; |
| | | more preferably 600 to 900; |
| | 3^{rd} film: ZnO, AlZnO, GaZnO, InZnO, InSnO, and /or VZnO | most preferably 720 to 800 |
| Optional 4^{th} Seed Film | VZnO, AlZnO, GaZnO, InZnO, SnInO, Ag, and/or Al doped Ag | 5 to 100; |
| | | preferably 7.5 to 80; |
| | | more preferably 9 to 60 |
| 4^{th} Metallic Layer | Ag, Cu, and/or Al doped Ag | 50 to 1000; |
| | | preferably 75 to 750; |
| | | more preferably 100 to 500; |
| | | most preferably 125 to 400 |
| 4^{th} Primer Layer | Ti, TiAl, Zn, AgZn, AgZnO, AlZnO, InZnO, GaZnO, AlTiO, AlNbO, AlNbN, WTiO, TiTaO, TiNbO, TiNbN, NbZrO, TaWO, WNbO, WNbN, ZnTiO, and/or VZnO | 5 to 50; |
| | | preferably 10 to 25; |
| | | more preferably 15 to 25 |
| 5^{th} Dielectric Layer | 1^{st} film: ZnO, AlZnO, GaZnO, InZnO, InSnO, and /or VZnO; | 400 to 1100; |
| | | preferably 500 to 1000; |
| | 2^{nd} film: Zn₂SnO₄; | more preferably 600 to 900; |
| | 3^{rd} film: ZnO, AlZnO, GaZnO,InZnO, InSnO, and /or VZnO | most preferably 700 to 825 |
| Optional 5^{th} Seed Film | VZnO, AlZnO, GaZnO, InZnO, SnInO, Ag, and/or Al doped Ag | 5 to 100; |
| | | preferably 7.5 to 80; |
| | | more preferably 9 to 60 |
| Optional 3^{rd} Protective Layer | Si₃N₄, SiON, SiAlN, SiAlO, TiAlO, and/or SiAlON | 10 to 800; |
| | | preferably 100 to 800; |
| | | more preferably 100 to 600; |
| | | most preferably 350 to 550 |

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the spirit and scope of the appended claims. For example, it is to be understood that the present invention contemplates that, to the extent possible, one or more features of any embodiment can be combined with one or more features of any other embodiment.

## Claims

1. A coated article comprising:
a substrate;
a first coating formed over the substrate, the first coating comprising:
a first dielectric layer over the substrate;
a first metallic layer over the first dielectric layer;
a first primer layer over the first metallic layer;
a second dielectric layer over the first primer layer; and
optionally a first protective layer over the second dielectric layer; and
a second coating formed over a first portion of the first coating, the first portion comprising at least an area above an AS-1 Line, wherein the second coating comprises:
a second metallic layer over a portion of the second dielectric layer or, if present, a portion of the first protective layer;
a second primer layer over the second metallic layer;
a third dielectric layer over the second primer layer; and
optionally a second protective layer over the third dielectric layer,
wherein a thickness of the metallic layer of the first coating is in the range of about 50 Å to about 600 Å.

2. The coated article of claim 1, wherein the second coating further comprises a third metallic layer over the third dielectric layer or, if present, over the second protective layer; a third primer layer over the third metallic layer; a fourth dielectric layer over the third primer layer; a fourth metallic layer over the fourth dielectric layer; a fourth primer layer over the fourth metallic layer; a fifth dielectric layer over the fourth primer layer; and optionally a third protective layer positioned over the fifth dielectric layer.

3. The coated article of claim 2, wherein the second coating further comprises a fifth metallic layer over the fifth dielectric layer or, if present, over the third protective layer; a fifth primer layer over the fifth metallic layer; a sixth dielectric layer over the fifth primer layer; a sixth metallic layer over the sixth dielectric layer; a sixth primer layer over the sixth metallic layer; a seventh dielectric layer over the sixth primer layer; and optionally a fourth protective layer positioned over the seventh dielectric layer.

4. The coated article of claim 3, wherein the third metallic layer, the fourth metallic layer, the fifth metallic layer, and the sixth metallic layer each have a thickness in the range of about 50 Å to about 1000 Å, preferably in the range of about 75 Å to about 750 Å, or even more preferably in the range of about 100 Å to about 500 Å.

5. The coated article of claim 1, wherein at least one of the first dielectric layer, the second dielectric layer, and/or the third dielectric layer comprises a zinc stannate film.

6. The coated article of claim 3, wherein at least one of the fourth dielectric layer, the fifth dielectric layer, the sixth dielectric layer, and/or the seventh dielectric layer comprises a zinc stannate film.

7. The coated article of claim 1, wherein at least one of the metallic layers comprises at least one of silver, copper, gold, aluminum, mixtures thereof, or alloys thereof.

8. The coated article of claim 1, wherein at least a portion of the coated article has a visible light reflectance of not more than 20%.

9. The coated article of claim 1, wherein the substrate is a glass substrate.

10. A method for forming a coated article, the method comprising the steps of:
providing a substrate, wherein the substrate comprises a first surface and a second surface;
depositing a first coating over one of the first surface or the second surface of the substrate, the first coating comprising:
a first dielectric layer over the substrate;
a first metallic layer over the first dielectric layer;
a first primer layer over the first metallic layer;
a second dielectric layer over the first primer layer; and
optionally a first protective layer over the second dielectric layer;
placing a mask over a portion of the first coating to yield a masked portion and an unmasked portion of the first coating; and
depositing a second coating over a first portion of the unmasked portion of the first coating, the first portion comprising at least an area above an AS-1 Line, wherein the second coating comprises:
a second metallic layer over a portion of the second dielectric layer or, if present, a portion of the first protective layer;
a second primer layer over the second metallic layer;
a third dielectric layer over the second primer layer; and
optionally a second protective layer over the third dielectric layer,
wherein a thickness of the metallic layer of the first coating is in the range of about 50 Å to about 600 Å.

11. The coated article of claim 1 or the method of claim 10, wherein the first portion consists of a non-viewing area of the vehicle windshield.

12. The coated article of claim 1 or the method of claim 10, wherein the coated article is a vehicle windshield and the second coating is present over a non-viewing area of the vehicle windshield.

13. The coated article of claim 1 or the method of claim 10, wherein the first metallic layer has a thickness in the range of about 50 Å to about 600 Å, and the second metallic layer has a thickness in the range of about 50 Å to about 1000 Å.

14. The coated article of claim 1 or the method of claim 10, wherein a portion of the coated article has a visible light transmittance of at least 70%.

15. The coated article of claim 1 or the method of claim 10, wherein the coated article has a sheet resistance of not more than about 0.8 Ω/□ above the AS-1 Line and a sheet resistance of at least about 0.7 Ω/□ below the AS-1 Line, with the caveat that the sheet resistance above the AS-1 Line must be less than the sheet resistance below the AS-1 Line.
